(19) Europäisches Patentamt / European Patent Office / Office européen des brevets

(11) **EP 4 316 763 A1**

(12) **EUROPEAN PATENT APPLICATION**
published in accordance with Art. 153(4) EPC

(43) Date of publication:
**07.02.2024 Bulletin 2024/06**

(21) Application number: 22780856.5

(22) Date of filing: **29.03.2022**

(51) International Patent Classification (IPC):
**B29B 9/00** (2006.01)     **C08F 255/02** (2006.01)
**C08L 51/06** (2006.01)     **C08J 9/16** (2006.01)
**B29C 44/00** (2006.01)     **B29C 48/00** (2019.01)

(52) Cooperative Patent Classification (CPC):
**B29B 9/00; B29C 44/00; B29C 48/00;
C08F 255/02; C08J 9/16; C08L 51/06**

(86) International application number:
**PCT/JP2022/015293**

(87) International publication number:
**WO 2022/210645 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.03.2021 JP 2021055660**

(71) Applicant: **Kaneka Corporation
Osaka-shi, Osaka 530-8288 (JP)**

(72) Inventors:
• **FUJISHITA, Ayaka
  Settsu-shi, Osaka 566-0072 (JP)**
• **GODA, Takayuki
  Settsu-shi, Osaka 566-0072 (JP)**

(74) Representative: **Vossius & Partner
Patentanwälte Rechtsanwälte mbB
Siebertstrasse 3
81675 München (DE)**

(54) **POLYPROPYLENE RESIN EXTRUDED FOAM PARTICLES, METHOD FOR PRODUCING SAME, AND FOAM MOLDED BODY**

(57)    An object is to provide a modified polypropylene-based resin which makes it possible to provide expanded polypropylene-based resin particles having a low open cell ratio and which has a high melt tension. The modified polypropylene-based resin is obtained by a reaction of a polypropylene-based resin which has a specific peak in a DSC curve, a conjugated diene compound, and a radical polymerization initiator. Alternatively, the modified polypropylene-based resin is a resin composition containing a modified polypropylene-based polymer. The resin composition is obtained by a reaction of a polypropylene-based resin, a specific ethylene-based polymer, a conjugated diene compound, and a radical polymerization initiator.

**Description**

Technical Field

The present invention relates to polypropylene-based resin extruded foamed particles and a method for producing the polypropylene-based resin extruded foamed particles, and an in-mold expanded product.

Background Art

A polypropylene-based resin in-mold expanded product obtained with use of polypropylene-based resin foamed particles has the characteristics of being excellent in, for example, the property of being molded in any shape, shock-absorbing properties, lightweight properties, and heat insulating properties.

A method of producing polypropylene-based resin foamed particles includes a pressure-release expansion method which is a discontinuous process, an extrusion foaming method which is a continuous process, and the like. The extrusion foaming method has many advantages in terms of efficiency and environment. For example, in the extrusion foaming method, continuous production is possible, and at the same time, any wastewater treatment facility, which is necessary in the pressure-release expansion method, is not required.

In the extrusion foaming method, a resin obtained by carrying out resin modification or multistep polymerization on a general-purpose linear polypropylene can be used. For example, Patent Literature 1 discloses a modified polypropylene-based resin composition, which is obtained by melt-kneading a polypropylene-based resin, a polyethylene-based resin, at least one monomer selected from the group consisting of an isoprene monomer and a 1,3-butadiene monomer, and a radical polymerization initiator. Patent Literature 1 also discloses a method of producing a foamed product made from the modified polypropylene-based resin composition. This production method is characterized by extruding and expanding a mixture in a melted state which consists of the modified polypropylene-based resin composition and a blowing agent.

Citation List

[Patent Literature]

[Patent Literature 1]
Japanese Patent Application Publication Tokukaihei No. 11-035723

Summary of Invention

Technical Problem

However, conventional techniques as described above are not sufficient from the viewpoint of providing polypropylene-based resin foamed particles having a low open cell ratio, and thus, there has been room for further improvement.

An aspect of the present invention has been made in view of the above problem, and an object of the present invention is to provide polypropylene-based resin foamed particles having a low open cell ratio.

Solution to Problem

Polypropylene-based resin extruded foamed particles in accordance with an embodiment of the present invention are polypropylene-based resin extruded foamed particles obtained by extrusion foaming of a modified polypropylene-based resin (B1), the modified polypropylene-based resin (B1) being obtained by a reaction of a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

Polypropylene-based resin extruded foamed particles in accordance with another embodiment of the present invention are polypropylene-based resin extruded foamed particles obtained by extrusion foaming of a resin composition containing a modified polypropylene-based resin (B), the resin composition being obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and the ethylene-based polymer (C) containing at least one selected from the group consisting of an ethylene-α-olefin elastomer (C1) and an ethylene-based polymer (C2) which has a peak at a temperature of 120°C to 140°C in a DSC curve that is obtained by a differential scanning calorimetry.

A method in accordance with an embodiment of the present invention for producing polypropylene-based resin extruded foamed particles includes: a melt-kneading step of melt-kneading a polypropylene-based resin (A1), a conjugated diene compound, and a radical polymerization initiator to obtain a modified polypropylene-based resin (B1); and an extrusion foaming step of extruding and foaming the modified polypropylene-based resin (B1), the polypropylene-based resin (A1) containing, in a molecule thereof, an ethylene homopolymerization unit, the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%, and the extrusion foaming step including: a first step of melt-kneading, in a production device, the modified polypropylene-based resin (B1) and a blowing agent; and a second step of discharging a composition obtained in the first step, through a die into a region having a pressure lower than an internal pressure of the production device.

A method in accordance with another embodiment of the present invention for producing polypropylene-based resin extruded foamed particles, includes: a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator to obtain a resin composition containing a modified polypropylene-based resin (B); and an extrusion foaming step of extruding and foaming the resin composition, the ethylene-based polymer (C) containing at least one selected from the group consisting of an ethylene-α-olefin elastomer (C1) and an ethylene-based polymer (C2) which has a peak at a temperature of 120°C to 140°C in a DSC curve that is obtained by a differential scanning calorimetry, and the extrusion foaming step including: a first step of melt-kneading, in a production device, the resin composition and a blowing agent; and a second step of discharging a composition obtained in the first step, through a die into a region having a pressure lower than an internal pressure of the production device.

Advantageous Effects of Invention

An aspect of the present invention of the present invention makes it possible to provide polypropylene-based resin foamed particles having a low open cell ratio.

Brief Description of Drawings

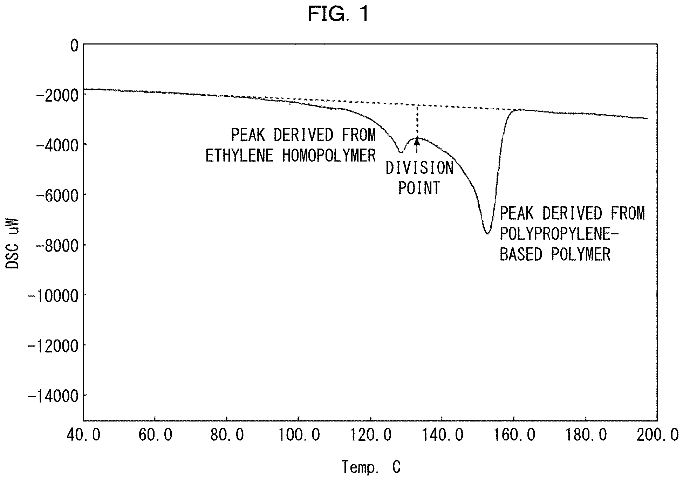

Fig. 1 is a diagram schematically illustrating a method of calculating an area of a peak in a DSC curve.

Description of Embodiments

The following description will discuss embodiments of the present invention. The present invention is not limited to arrangements described below, but may be altered in various ways by a skilled person within the scope of the claims. Any embodiment or example derived from a proper combination of technical means disclosed in different embodiments or examples is also encompassed in the technical scope of the present invention. Furthermore, a new technical feature can be formed by a combination of technical means disclosed in different embodiments. All academic and patent literatures cited herein are incorporated herein by reference. Any numerical range expressed as "A to B" herein means "not less than A and not more than B (i.e., a range from A to B which includes both A and B)" unless otherwise stated.

[1. Modified polypropylene-based resin or resin composition]

The inventors of the present invention have conducted diligent studies in order to solve the above problem, and as a result, found that it is possible to provide (i) a modified polypropylene-based resin or a resin composition which has a high melt tension and (ii) polypropylene-based resin foamed particles which have a low open cell ratio while an amount of a radical polymerization initiator used is reduced, with use of the following means:

reacting, with a conjugated diene compound, a polypropylene-based resin (A1) having a specific peak in a DSC curve; or
reacting a specific ethylene-based polymer (C) with a polypropylene-based resin (A) via the conjugated diene compound.

The present invention has been thus accomplished.

A modified polypropylene-based resin (B1) in accordance with an embodiment of the present invention is obtained by a reaction of a polypropylene-based resin (A1), a conjugated diene compound and a radical polymerization initiator. The polypropylene-based resin (A1) contains, in a molecule thereof, an ethylene homopolymerization unit, and has, in a DSC curve that is obtained by a differential scanning calorimetry, a peak which is derived from the ethylene homopolymerization unit, which is at a temperature of 120°C to 140°C, and which has an area that is 1% to 40% relative to a total area of the DSC curve on the premise that the total area is 100%.

In the present specification, the "modified polypropylene-based resin in accordance with an embodiment of the present invention" may be also referred to as "the present modified polypropylene-based resin". The modified polypropylene-based resin obtained with use of the polypropylene-based resin (A1) is referred to as the "modified polypropylene-based resin (B1)". When referred to as simply "modified polypropylene-based resin" or "the present modified polypropylene-based resin", such a modified polypropylene-based resin encompasses the modified polypropylene-based resin (B1) and the modified polypropylene-based resin (B) which will be described later.

Having the above-described feature, the modified polypropylene-based resin (B1) has the advantage of exhibiting a high melt tension. Further, the modified polypropylene-based resin (B1) also has the advantage of making it possible to obtain polypropylene-based resin extruded foamed particles having a low open cell ratio. Furthermore, the modified polypropylene-based resin (B1) also has the advantage of being obtained by a production method that uses a smaller amount of the radical polymerization initiator as compared to a conventional method. The radical polymerization initiator is often expensive. Therefore, as an additional advantage, the modified polypropylene-based resin (B1) can be obtained less expensively as compared to a conventional polypropylene-based resin while exhibiting a high melt tension.

The modified polypropylene-based resin (B1) contains a structural unit derived from the polypropylene-based resin (A1) and a structural unit derived from the conjugated diene compound. The modified polypropylene-based resin (B1) may contain the above-described ethylene homopolymerization unit in the structural unit derived from the polypropylene-based resin (A1). In a case where another resin is used in production of the modified polypropylene-based resin (B1), the modified polypropylene-based resin (B1) contains the another resin and/or a component derived from the another resin. Further, the modified polypropylene-based resin (B1) may contain a structural unit derived from the radical polymerization initiator. Note, here, that the "structural unit derived from the radical polymerization initiator" indicates a structural unit(s) derived from various substances generated by decomposition of the radical polymerization initiator during production of the modified polypropylene-based resin (B1). In a case where another component is used in production of the modified polypropylene-based resin (B1), the modified polypropylene-based resin (B1) contains the another component.

Further, polypropylene-based resin extruded foamed particles in accordance with an embodiment of the present invention is a resin composition containing a modified polypropylene-based resin (B). The resin composition is obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator. The ethylene-based polymer (C) may contain at least one selected from the group consisting of an ethylene-α-olefin elastomer (C1) and an ethylene-based polymer (C2) which has a peak at a temperature of 120°C to 140°C in a DSC curve that is obtained by a differential scanning calorimetry. The polypropylene-based resin (A) to be reacted with the aforesaid ethylene-based polymer (C) may be the above-described polypropylene-based resin (A1) which contains, in the molecule, an ethylene homopolymerization unit, or may be another polypropylene-based resin.

The "resin composition in accordance with an embodiment of the present invention" may be also referred to as "the present resin composition". The modified polypropylene-based resin contained in the present resin composition, i.e., a modified polypropylene-based resin obtained with use of the polypropylene-based resin (A), is referred to as the "modified polypropylene-based resin (B)". Since the present resin composition also has the feature which has been described earlier, the present resin composition also has advantages similar to those of the modified polypropylene-based resin (B1).

The modified polypropylene-based resin (B) contains a structural unit derived from the polypropylene-based resin (A) and a structural unit derived from the conjugated diene compound. Further, the modified polypropylene-based resin (B) may contain, in the same manner as the modified polypropylene-based resin (B1), a structural unit derived from a radical polymerization initiator, another resin and/or a component derived from another resin, and another component. The modified polypropylene-based resin (B) may contain, separately from the structural unit derived from the polypropylene-based resin (A), a structural unit derived from at least one selected from the group consisting of the ethylene-α-olefin elastomer (C1) and the ethylene-based polymer (C2).

The modified polypropylene-based resin (B) may have a structure in which polypropylene-based resins (A) are crosslinked with each other and/or a structure in which the polypropylene-based resin (A) and the ethylene-based polymer (C) are crosslinked with each other. The resin composition may contain a resin that has a structure in which the polypropylene-based resin (A) and the ethylene-based polymer (C) are crosslinked with each other, a resin that has a structure in which the polypropylene-based resins (A) are crosslinked with each other, and/or a resin that has a resin in which ethylene-based polymers (C) are crosslinked with each other. The modified polypropylene-based resin (B) may be the modified polypropylene-based resin (B1) or a modified polypropylene-based resin other than the modified polypropylene-based resin (B1).

(Polypropylene-based resin (A))

In the present specification, the polypropylene-based resin (A) is intended to mean a resin which contains structural units derived from a propylene monomer in a proportion of not less than 50% by weight relative to 100% by weight of all structural units contained in the resin. In the present specification, the "structural units derived from a propylene monomer" may be referred to as "propylene units".

The polypropylene-based resin (A) used in the present production method may be (a) a homopolymer of propylene, (b) a block copolymer, a random copolymer, or a graft copolymer of propylene and a monomer other than propylene, or (c) a mixture of these. The random copolymer is preferably a copolymer (propylene-ethylene random copolymer) containing a propylene unit and a structural unit (ethylene unit) which is derived from an ethylene monomer. The amount of such ethylene units (ethylene content) in 100% by weight of the random copolymer is preferably 0% by weight to 5.5% by weight, more preferably 0% by weight to 3.0% by weight, and even more preferably 0% by weight to 2.5% by weight. Alternatively, the polypropylene-based resin (A) may be a polypropylene-based resin (A1) containing, in a molecule thereof, an ethylene homopolymerization unit, as described later.

The polypropylene-based resin (A) may be (a) a polypropylene-based resin that has not been modified or (b) a mixture of a polypropylene-based resin that has not been modified and a modified polypropylene-based resin. The modified polypropylene-based resin that is used in the above (b) mixture with the polypropylene-based resin that has not been modified may be (i) a modified polypropylene-based resin obtained by the present production method, (ii) a graft copolymer of propylene and a monomer other than propylene, (iii) a modified polypropylene-based resin obtained by introducing, into the polypropylene-based resin which has not been modified, a branched structure by a method in which the polypropylene-based resin that has not been modified is irradiated with radial rays, or (iv) a mixture of these.

The polypropylene-based resin (A) may include, in addition to the propylene unit, a structural unit derived from a monomer other than a propylene monomer in such a manner as to include such a structural unit in a quantity of one or more units or as to include one or more types of such structural units. The monomer other than a propylene monomer used in producing the polypropylene-based resin (A) can be referred to as a "comonomer". The "structural unit derived from the monomer other than a propylene monomer" included in the polypropylene-based resin (A) can be referred to as a "comonomer unit".

Examples of such a comonomer encompass: (a) an $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, or 1-decene; (b) a cyclic olefin such as cyclopentene, norbornene, or tetracyclo[6,2,11,8,13,6]-4-dodecene; (c) a diene such as 5-methylene-2-norbornene, 5-ethylidene-2-norbornene, 1,4-hexadiene, methyl-1,4-hexadiene, or 7-methyl-1,6-octadiene; and (d) a vinyl-based monomer such as vinyl chloride, vinylidene chloride, acrylonitrile, methacrylonitrile, vinyl acetate, acrylic acid, an acrylic ester, methacrylic acid, a methacrylic ester, maleic acid, maleic anhydride, a styrene-based monomer, vinyltoluene, or divinylbenzene.

Examples of the acrylic ester encompass methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic ester encompass methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomer encompass styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The polypropylene-based resin (A) includes, as a comonomer unit, preferably a structural unit derived from an $\alpha$-olefin having 2 or 4 to 12 carbon atoms, more preferably a structural unit derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit derived from ethylene, 1-butene, isobutene, 1-pentene, 3-methyl-1-butene, 1-hexene, and/or 4-methyl-1-pentene, even more preferably a structural unit derived from ethylene, 1-butene, isobutene, and/or 1-pentene, and more particularly preferably a structural unit derived from ethylene and/or 1-butene. This configuration offers the following advantages: (a) a modified polypropylene-based resin or a resin composition which has a high melt tension and a low gel fraction is obtained; and (b) a resulting modified polypropylene-based resin or a resulting resin composition can provide polypropylene-based resin extruded foamed particles that have excellent moldability.

The polypropylene-based resin (A) includes the propylene unit in an amount which is preferably not less than 90% by weight, more preferably not less than 93% by weight, even more preferably not less than 95% by weight, and particularly preferably not less than 97% by weight, relative to 100% by weight of all structural units included in the polypropylene-based resin (A). This configuration offers the advantage that a modified polypropylene-based resin or a resin composition which has a high melt tension and a low gel fraction is obtained.

The melting point of the polypropylene-based resin (A) is not particularly limited. The melting point of the polypropylene-based resin (A) is, for example, preferably 130°C to 165°C, more preferably 135°C to 164°C, even more preferably 138°C to 163°C, and particularly preferably 140°C to 162°C. In a case where the melting point of the polypropylene-based resin (A) is not less than 130°C, the following advantages are obtained: dimensional stability of an in-mold expanded product is unlikely to decrease; heat resistance of the in-mold expanded product is likely to be sufficient; and the in-mold expanded product is likely to have high compressive strength. In a case where the melting point of the polypropylene-based resin is not more than 165°C, the following advantage is obtained: it is possible to mold the extruded foamed particles at a relatively low steam pressure and therefore possible to mold the extruded foamed particles with use of a general-purpose molding machine for polypropylene-based resin foamed particles.

In the present specification, the melting point of the polypropylene-based resin (A) is measured by a differential scanning calorimetry (hereinafter referred to as "DSC method"). A specific operational procedure is as follows: (1) the temperature of 5 mg to 6 mg of the polypropylene-based resin (A) is increased from 40°C to 220°C at a temperature increase rate of 10°C/min so that the polypropylene-based resin (A) is melted; (2) after that, the temperature of the melted polypropylene-based resin (A) is decreased from 220°C to 40°C at a temperature decrease rate of 10°C/min so that the polypropylene-based resin (A) is crystallized; and (3) then, the temperature of the crystallized polypropylene-based resin (A) is further increased from 40°C to 220°C at a temperature increase rate of 10°C/min. It is possible to determine, as the melting point of the polypropylene-based resin (A), a temperature of a peak (melting peak) in a DSC curve of the polypropylene-based resin (A). The DSC curve here is obtained during second temperature increase (i.e., in (3) above). As a differential scanning calorimeter, it is possible to use, for example, a differential scanning calorimeter of a DSC6200 type available from Seiko Instruments Inc.

The melt flow rate (MFR) of the polypropylene-based resin (A) is not particularly limited, and is preferably 0.5 g/10 minutes to 20.0 g/10 minutes, more preferably 0.5 g/10 minutes to 15.0 g, even more preferably 0.5 g/10 minutes to 12.0 g/10 minutes, and particularly preferably 0.5 g/10 minutes to 10.0 g/10 minutes. In a case where the MFR of the polypropylene-based resin (A) is not less than 0.5 g/10 minutes, the following advantage is obtained: a resulting modified polypropylene-based resin or a resulting resin composition can provide an in-mold expanded product which is less deformed and which has a good surface property (beautiful surface). In a case where the MFR of the polypropylene-based resin is not more than 20.0 g/10 minutes, the following advantage is obtained: polypropylene-based resin foamed particles having a low open cell ratio can be obtained.

In the present specification, the MFR of the polypropylene-based resin (A) is a value obtained by measurement with use of an MFR measuring apparatus described in JIS K7210 under the following conditions: a diameter φ of an orifice of 2.0959±0.0050 mm; a length of the orifice of 8.000±0.025 mm; a load of 2160 g; and a temperature of 230±0.2°C.

In an embodiment of the present invention, the polypropylene-based resin (A) may contain, in a molecule thereof, an ethylene homopolymerization unit (i.e., may be the polypropylene-based resin (A1)). In the present specification, the ethylene homopolymerization unit means a structural unit which contains a plurality of ethylene units in series. The number of such consecutive ethylene units is not limited, and may be, for example, 2 to 3000 units or may be 10 to 2500 units. In a case where the polypropylene-based resin (A1) contains the consecutive ethylene units, it is inferred that a structural unit derived from an ethylene homopolymer seemingly appears to be contained in the molecule. Therefore, in the present specification, such a structural unit is referred to as "ethylene homopolymerization unit". The polypropylene-based resin (A1) may be a resin obtained by actually polymerizing the ethylene-based homopolymer and the polypropylene-based resin (A).

Further, in the above-described polypropylene-based resin (A1), a structural unit other than the ethylene homopolymerization unit may be (i) a propylene homopolymerization unit (structural unit containing a plurality of propylene units in series); or (ii) a propylene random copolymer unit (structural unit in which two or more of propylene units and comonomer units are randomly bound to each other). Structural units other than these ethylene homopolymerization units are collectively referred to as "polypropylene-based polymer unit".

The polypropylene-based resin (A1) has a peak derived from the ethylene homopolymerization unit in a DSC curve that is obtained by the DSC method described above. That is, the polypropylene-based resin (A1) can have at least two peaks in a DSC curve. These two peaks are a peak derived from the polypropylene-based polymer unit and a peak derived from the ethylene homopolymerization unit. The peak derived from the ethylene homopolymerization unit of the above peaks is at a temperature of preferably 120°C to 140°C, more preferably 125°C to 140°C, and even more preferably 130°C to 140°C. It is inferred that the ethylene homopolymerization unit which exhibits such a peak temperature corresponds to an ethylene homopolymer which has a density of not less than 0.925 g/cm$^3$. Examples of such an ethylene homopolymer include high-density polyethylene (HDPE).

The peak derived from the ethylene homopolymerization unit has an area that is preferably 1% to 40%, more preferably 2% to 35%, and even more preferably 2% to 30% relative to a total area of the DSC curve on the premise that the total area is 100%. The area of the peak is calculated as follows. Fig. 1 is a diagram schematically illustrating a method of calculating an area of a peak in a DSC curve. The DSC curve is obtained by the method described above. The DSC curve in Fig. 1 is an example of a DSC curve obtained during the second temperature increase of the polypropylene-based resin (A1). A straight line (tangent line) is drawn to connect the temperature before the start of melting and the temperature after the end of melting in the DSC curve. The area surrounded by the tangent line and the DSC curve is defined as the total area of the DSC curve. There is a peak derived from the ethylene homopolymer and a peak derived from the polypropylene-based polymer in the DSC curve. The maximum point at which the largest value is obtained exists between the peak which is derived from the ethylene homopolymer and the peak which is derived from the polypropylene-based polymer. The maximum point at which the value is the largest is defined as a division point. Another straight line is drawn from the division point to the tangent line at the shortest distance. The total area of the DSC curve is thus divided. Of resulting divisional areas, an area including the peak derived from the ethylene homopolymer is regarded as an area of the peak derived from the ethylene homopolymerization unit.

(Ethylene-based polymer (C))

In order to obtain the modified polypropylene-based resin (B) or the resin composition, an ethylene-based polymer (C) having an ethylene content of more than 50% by weight may be used. In the present specification, the ethylene content of the ethylene-based polymer (C) means the content of ethylene units in 100% by weight of the ethylene-based polymer (C). The ethylene content can be calculated by the method described in Examples which will be described later. Since the ethylene-based polymer (C) has an ethylene content of more than 50% by weight, the ethylene-based polymer (C) can be distinguished from the polypropylene-based resin (A) which contains not less than 50% by weight of propylene units.

The ethylene-based polymer (C) may or may not contain a structural unit(s) derived from a monomer(s) other than the ethylene monomer. The ethylene content is preferably not less than 70% by weight, more preferably not less than 80% by weight, and even more preferably not less than 90% by weight. The upper limit of the ethylene content is not particularly limited, and may be, for example, not more than 100% by weight or not more than 95% by weight.

In a case where the amount of the ethylene-based polymer (C) used relative to 100 parts by weight of the polypropylene-based resin (A) is not less than 0.1 parts by weight, the following advantage is obtained: a modified polypropylene-based resin (B) or a resin composition which has a sufficient melt tension can be obtained even in a case where the amount of the radical polymerization initiator used is reduced. In a case where the amount of the ethylene-based polymer (C) used is not more than 13.0 parts by weight, the following advantage is obtained: excessive generation of a gel content generated by crosslinking can be suppressed. The amount of the ethylene-based polymer (C) used is preferably 0.1 parts by weight to 10.0 parts by weight, more preferably 0.1 parts by weight to 5.0 parts by weight, even more preferably 0.1 parts by weight to 4.0 parts by weight, particularly preferably 0.5 parts by weight to 3.5 parts by weight, and most preferably 0.5 parts by weight to 3.0 parts by weight.

Specifically, the ethylene-based polymer (C) contains the ethylene-$\alpha$-olefin elastomer (C1) and/or the ethylene-based polymer (C2) which has a peak at a temperature of 120°C to 140°C in a DSC curve that is obtained by the DSC method. This offers the advantage that the modified polypropylene-based resin (B) or the resin composition exhibits a high melt tension. Further, with use of the modified polypropylene-based resin (B) or the resin composition, it is possible to obtain foamed particles having a low open cell ratio.

In the present specification, the "elastomer" is intended to mean a resin having a surface hardness (Shore A) of 70 to 95. This surface hardness is defined in ASTM D2240.

Examples of the ethylene-$\alpha$-olefin elastomer (C1) include: (i) an ethylene-$\alpha$-olefin copolymer; (ii) an ethylene-$\alpha$-olefin-nonconjugated diene copolymer; and (iii) a graft copolymer consisting of a main chain and a side chain. In the (iii) graft copolymer here, a component that mainly makes up the main chain is, for example, an ethylene-$\alpha$-olefin copolymer and/or an ethylene-$\alpha$-olefin-nonconjugated diene copolymer and a component that mainly makes up the side chain is a vinyl polymer containing at least one type of structural unit which is derived from at least one type of vinyl monomer. Note that in the (iii) graft copolymer, the vinyl polymer may be a homopolymer or a copolymer. Each of these copolymers can be used solely, or two or more kinds of the copolymers can be used in combination.

Examples of the $\alpha$-olefin include propylene, 1-butene, 1-pentene, 1-hexene, 1-octene, 1-decene, 2-methyl-1-propene, 3-methyl-1-pentene, 4-methyl-1-pentene, and 5-methyl-1-hexene. Each of these $\alpha$-olefins can be used solely, or two or more kinds of these $\alpha$-olefins can be used in mixture. Examples of the nonconjugated diene (nonconjugated diene compound) include dicyclopentadiene, 1,4-hexadiene, cyclooctadiene, methylene norbornene, ethylidene norbornene, and vinyl norbornene. Each of these nonconjugated dienes can be used solely, or two or more kinds of these nonconjugated dienes can be used in mixtures.

Examples of the ethylene-$\alpha$-olefin copolymer include an ethylene-propylene copolymer, an ethylene-1-butene copolymer, an ethylene-1-hexene copolymer, and an ethylene-1-octene copolymer. Examples of the ethylene-$\alpha$-olefin-

nonconjugated diene copolymer include an ethylene-1-butene-nonconjugated diene copolymer and an ethylene-propylene-nonconjugated diene copolymer.

The vinyl monomer is preferably at least one type of monomer selected from the group consisting of: (meth)acrylic acid alkyl ester whose alkyl chain length is 1 to 20 carbon atoms; a vinyl monomer having an acid group; a vinyl monomer having a hydroxyl group; a vinyl monomer having an epoxy group; a vinyl monomer having a cyano group; and styrene. More specifically, examples of the vinyl monomer include methyl (meth)acrylate, ethyl (meth)acrylate, butyl (meth)acrylate, hexyl (meth)acrylate, 2-ethylhexyl (meth)acrylate, lauryl (meth)acrylate, stearyl (meth)acrylate, (meth)acrylic acid, maleic acid, maleic anhydride, 2-hydroxyethyl (meth)acrylate, 2-hydroxypropyl (meth)acrylate, glycidyl (meth)acrylate, (meth)acrylonitrile, styrene, propylene, and octene.

The ethylene content in the ethylene-$\alpha$-olefin elastomer (C1) is preferably not less than 80% by weight, and more preferably not less than 90% by weight. The upper limit of the ethylene content in the ethylene-$\alpha$-olefin elastomer (C1) is not particularly limited, and may be, for example, not more than 99% by weight or not more than 95% by weight.

The ethylene-based polymer (C2) having a peak at 120°C to 140°C in a DSC curve obtained by the DSC method is preferably an ethylene-based polymer having a density of not less than 0.925 $g/cm^3$ and not more than 0.97 $g/cm^3$, and more preferably an ethylene-based polymer having a density of not less than 0.942 $g/cm^3$ and not more than 0.97 $g/cm^3$. Further, the temperature of the peak is more preferably 125°C to 140°C, and even more preferably 130°C to 140°C. The ethylene-based polymer (C2) may be an ethylene homopolymer. Examples of such an ethylene-based polymer (C2) include high-density polyethylene (HDPE). It is preferable not to use resins which are less than 0.925 $g/cm^3$ in density, such as low-density polyethylene (LDPE), very low-density polyethylene (VLDPE), and linear low-density polyethylene (LLDPE), as a raw material(s) for the modified polypropylene-based resin (B) or for the resin composition. The resin having a density of less than 0.925 $g/cm^3$ can cause the temperature of the peak in the DSC curve to be outside the range of 120°C to 140°C (e.g., in the range of 90°C to 115°C).

The following description will discuss a case in which the above-described DSC method is carried out with use of a mixture of the polypropylene-based resin (A) and the ethylene-based polymer (C2) in lieu of the polypropylene-based resin (A1). In this case, there may be a peak derived from the ethylene-based polymer (C2) in a DSC curve that is obtained. In other words, the mixture of the polypropylene-based resin (A) and the ethylene-based polymer (C2) can have at least two peaks in a DSC curve that is obtained during the second temperature increase. The two peaks are a peak derived from the polypropylene-based resin (A) and a peak derived from the ethylene-based polymer (C2). Among these peaks, the temperature of the peak derived from the ethylene-based polymer (C2) may be 120°C to 140°C, may be 125°C to 140°C, or may be 130°C to 140°C. It is inferred that the ethylene-based polymer (C2) which exhibits such a peak temperature corresponds to an ethylene homopolymer which has a density of not less than 0.925 $g/cm^3$. In the DSC curve of the mixture of the polypropylene-based resin (A) and the ethylene-based polymer (C2), the area of the peak derived from the ethylene-based polymer (C2) is preferably 1% to 40%, more preferably 2% to 35%, and even more preferably 2% to 30% relative to the total area of the DSC curve on the premise that the total area is 100%. The area of the peak can be calculated by a method that is similar to the above-described method for the area of the peak derived from the ethylene homopolymerization unit in the DSC curve of the polypropylene-based resin (A1). In the DSC curve of the mixture of the polypropylene-based resin (A) and the ethylene-based polymer (C2), the area of the peak derived from the ethylene-based polymer (C2) is highly correlated with the content (ratio) of the ethylene-based polymer (C2) in the mixture. In the DSC curve of the mixture of the polypropylene-based resin (A) and the ethylene-based polymer (C2), in a case where the area of the peak derived from the ethylene-based polymer (C2) is 1% to 40% relative to the total area of the DSC curve on the premise that the total area is 100%, it can be said that the amount of the ethylene-based polymer (C2) in the mixture relative to 100 parts by weight of the polypropylene-based resin (A) is highly likely to be 0.1 parts by weight to 13.0 parts by weight.

(Conjugated diene compound)

Examples of the conjugated diene compound that can be used in an embodiment of the present invention include butadiene, isoprene, 1,3-heptadiene, 2,3-dimethylbutadiene, and 2,5-dimethyl-2,4-hexadiene. Each of these conjugated diene compounds may be used solely or two or more of these conjugated diene compounds may be used in combination. Out of these conjugated diene compounds, butadiene and isoprene are particularly preferable because (a) they are inexpensive and easy to handle and (b) they are likely to undergo uniform reaction.

An amount of the conjugated diene compound used is preferably 0.20 parts by weight to 1.50 parts by weight, more preferably 0.25 parts by weight to 0.80 parts by weight, and even more preferably 0.25 parts by weight to 0.60 parts by weight, relative to 100 parts by weight of the polypropylene-based resin (A). In a case where the amount of the conjugated diene compound used is not less than 0.20 parts by weight relative to 100 parts by weight of the polypropylene-based resin (A), the number of crosslinks introduced into the polypropylene-based resin (A) becomes sufficient. This consequently makes it possible to sufficiently increase a melt tension of the resulting modified polypropylene-based resin or the resulting resin composition (e.g., to not less than 8 cN). In a case where the amount of the conjugated diene compound used is not more than 1.50 parts by weight relative to 100 parts by weight of the polypropylene-based resin (A), the number of crosslinks formed between the polypropylene-based resins (A) by the conjugated diene compound is adequate. This consequently makes it possible to reduce the viscosity of the resulting modified polypropylene-based resin or the resulting resin composition. As a result, it becomes easy to obtain, from the resulting modified polypropylene-based resin or the resulting resin composition, polypropylene-based resin extruded foamed particles having a high expansion ratio. In a case where the amount of the conjugated diene compound used is more than 1.50 parts by weight, a large amount of gel content may be generated and may result in breakage of cells during foaming. As described above, in a case where the ethylene-based polymer (C) is used, ethylene-based polymers (C) may be crosslinked with each other or the polypropylene-based resin (A) and the ethylene-based polymer (C) may be crosslinked with each other.

A monomer copolymerizable with the conjugated diene compound may be used in combination with the polypropylene-based resin (A), the ethylene-based polymer (C), the conjugated diene compound, and the radical polymerization initiator, provided that the effect of an embodiment of the present invention is not impaired. In other words, a resin mixture, which will be described later, may further contain a monomer which is copolymerizable with the conjugated diene compound. Examples of the monomer copolymerizable with the conjugated diene compound include (a) acrylic esters such as vinyl chloride, vinylidene chloride, acrylonitrile, methacrylonitrile, acrylamide, methacrylamide, vinyl acetate, acrylic acid, methacrylic acid, maleic acid, maleic anhydride, acrylic metal salt, methacrylic metal salt, methyl acrylate, ethyl acrylate, butyl acrylate, 2-ethylhexyl acrylate, and stearyl acrylate; and (b) methacrylic esters such as methyl methacrylate, ethyl methacrylate, butyl methacrylate, 2-ethylhexyl methacrylate, and stearyl methacrylate.

(Radical polymerization initiator)

The radical polymerization initiator in accordance with an embodiment of the present invention is preferably an organic peroxide having hydrogen abstraction ability for abstracting hydrogen from the polypropylene-based resin (A), the ethylene-based polymer (C) and the conjugated diene compound. Examples of the radical polymerization initiator suitably used in an embodiment of the present invention include organic peroxides such as ketone peroxide, peroxyketal, hydroperoxide, dialkyl peroxide, diacyl peroxide, peroxy dicarbonate, and peroxy ester.

In particular, the organic peroxide preferably has high hydrogen abstraction ability. Suitable examples of the organic peroxide having high hydrogen abstraction ability include: peroxy ketal such as 1,1-bis(t-butyl peroxy)3,3,5-trimethylcyclohexane, 1,1-bis(t-butyl peroxy)cyclohexane, n-butyl 4,4-bis(t-butyl peroxy)valerate, and 2,2-bis(t-butyl peroxy)butane; dialkyl peroxide such as dicumyl peroxide, 2,5-dimethyl-2,5-di(t-butyl peroxy)hexane, $\alpha,\alpha'$-bis(t-butyl peroxy-m-isopropyl)benzene, t-butyl cumyl peroxide, di-t-butyl peroxide, and 2,5-dimethyl-2,5-di(t-butyl peroxy)-3-hexyne; diacyl peroxide such as benzoyl peroxide; peroxy ester such as t-butyl peroxy octoate, t-butyl peroxy isobutyrate, t-butyl peroxy laurate, t-butyl peroxy 3,5,5-trimethylhexanoate, t-butyl peroxy isopropyl carbonate, 2,5-dimethyl-2,5-di(benzoyl peroxy)hexane, t-butyl peroxy acetate, t-butyl peroxy benzoate, and di-t-butyl peroxy isophthalate; and the like. Among these, t-butyl peroxy isopropyl carbonate, t-butyl peroxy benzoate, and 2,2-bis(t-butyl peroxy)butane are preferable. Each of these organic peroxides may be used solely or two or more of these organic peroxides may be used in combination.

An amount of the radical polymerization initiator used is preferably 0.40 parts by weight to 1.00 part by weight, more preferably 0.50 parts by weight to 1.00 part by weight, and even more preferably 0.50 parts by weight to 0.90 parts by weight, relative to 100 parts by weight of the polypropylene-based resin (A). In a case where the amount of the radical polymerization initiator used is not less than 0.40 parts by weight relative to 100 parts by weight of the polypropylene-based resin (A), the number of crosslinks introduced into the polypropylene-based resin (A) may be sufficient. As a result, in a case where the resulting modified polypropylene-based resin or the resulting resin composition is used for extrusion foaming, the modified polypropylene-based resin or the resin composition exhibits a sufficient strain hardening property. Therefore, extruded foamed particles having a low open cell ratio is likely to be obtained. In a case where the amount of the radical polymerization initiator used is not more than 1.00 part by weight relative to 100 parts by weight of the polypropylene-based resin (A), hydrogen abstraction from the polypropylene-based resin (A) by the radical polymerization initiator is sufficient. Accordingly, the molecular weight of the modified polypropylene-based resin obtained does not decrease. Further, it is possible to inexpensively obtain the modified polypropylene-based resin or the resin composition. As a result, in a case where the modified polypropylene-based resin or the resin composition is used for extrusion foaming, extruded foamed particles having a high expansion ratio and a low open cell ratio is likely to be obtained.

(Resin mixture)

In a production method of the present modified polyethylene-based resin or the present resin composition, a mixture that contains at least a polypropylene-based resin (A), a conjugated diene compound, and a radical polymerization initiator (and in an embodiment, further contains an ethylene-based polymer (C)) is referred to as a resin mixture.

(Other components)

In the production method of the present modified polyethylene-based resin or the present resin composition, another component or other components may be used as necessary, in addition to the polypropylene-based resin (A), the ethylene-based polymer (C), the conjugated diene compound and the radical polymerization initiator described above. In other words, the resin mixture may further contain another component or other components as necessary. Examples of such another component or other components include (a) resins (which hereinafter may be referred to as another resin) other than the polypropylene-based resin (A) and the ethylene-based polymer (C), (b) stabilizers such as an antioxidant, a metal deactivator, a phosphorous processing stabilizer, an ultraviolet absorber, an ultraviolet stabilizer, a fluorescent brightening agent, metallic soap, and an antacid adsorbent and/or (c) additives such as a cell adjusting agent, a coloring agent, a chain transfer agent, a lubricant, a plasticizer, a filler, a reinforcer, a flame retardant, a water retaining agent and an antistatic agent. Examples of the another resin include: (a) polyolefin-based resins other than the polypropylene-based resin (A) and the ethylene-based polymer (C); (b) ethylene-based resins such as an ethylene/vinyl acetate copolymer, an ethylene/acrylic acid copolymer, and an ethylene/methacrylic acid copolymer; and (c) styrene-based resins such as polystyrene, a styrene/maleic anhydride copolymer, and a styrene/ethylene copolymer. Each of these other components may be used solely or two or more of these other components may be used in combination.

(Physical properties of modified polypropylene-based resin or resin composition)

The melt tension of the present modified polypropylene-based resin or the present resin composition is preferably 8.0 cN to 12.0 cN. In a case where the melt tension of the present modified polypropylene-based resin is arranged as described above, the melt tension of the modified polypropylene-based resin at foaming becomes sufficiently high when polypropylene-based resin extruded foamed particles are produced by the extrusion foaming method using the present modified polypropylene-based resin. This consequently has the advantage that a cell membrane can be sufficiently retained in the polypropylene-based resin extruded foamed particles obtained. The use of the present resin composition instead of the present modified polypropylene-based resin has the same advantage. The lower limit of the melt tension is preferably not less than 8.0 cN, more preferably not less than 8.2 cN, more preferably not less than 8.4 cN, more preferably not less than 8.6 cN, more preferably not less than 8.8 cN, and even more preferably not less than 9.0 cN. The upper limit of the melt tension may be not more than 11.8 cN, not more than 11.6 cN, not more than 11.4 cN, not more than 11.2 cN, not more than 11.0 cN, not more than 10.5 cN, or not more than 10.0 cN.

It is preferable that a drawing speed at break of the present modified polypropylene-based resin or the present resin composition be not more than 7.0 m/min. With this feature, the following advantage is obtained: when the polypropylene-based resin extruded foamed particles are produced by the extrusion foaming method using the present modified polypropylene-based resin, a degree of elongation of the present modified polypropylene-based resin at the time of foaming is sufficient to retain the cell membrane and is not excessive. The use of the present resin composition instead of the present modified polypropylene-based resin has the same advantage. The drawing speed at break is preferably not more than 6.5 m/min, more preferably not more than 6.0 m/min, even more preferably not more than 5.8 m/min, and particularly preferably not more than 5.5 m/min. The drawing speed at break may be not more than 5.0 m/min, not more than 4.8 m/min, not more than 4.5 m/min, not more than 4.3 m/min, and not more than 4.0 m/min. The lower limit of the drawing speed at break may be not less than 3.5 m/min, not less than 3.8 m/min, not less than 4.0 m/min, not less than 4.2 m/min, not less than 4.5 m/min, not less than 4.7 m/min, not less than 5.0 m/min, not less than 5.2 m/min, or not less than 5.5 m/min. It is preferable that the present modified polypropylene-based resin or the present resin composition have a melt tension of 8.0 cN to 12.0 cN and a drawing speed at break of not more than 7.0 m/min.

The following description will discuss a method of measuring the melt tension and the drawing speed at break adopted in the present specification. The melt tension is measured with use of Capilograph 1D (available from Toyo Seiki Seisaku-sho, Ltd., Japan) in the present specification. Specifically, the melt tension is measured by the following (1) to (5): (1) a barrel which has a diameter of 9.55 mm and which has been heated to a test temperature (200°C) is filled with a sample resin (the present modified polypropylene-based resin or the present resin composition) for measurement; (2) next, the sample resin is heated for 10 minutes in the barrel which has been heated to the test temperature (200°C); (3) subsequently, while the sample resin is drawn in a strand shape from a capillary die (diameter: 1.0 mm, length: 10 mm) at a piston falling speed kept constant (10 mm/minute), this strand-like sample resin is caused to pass through a pulley which is for detecting a tension and which is located 350 mm below the capillary die, and then take-up of the strand-like sample resin is started with use of a take-up roll; (4) after drawing of the strand-like sample resin becomes stable, the take-up speed of the strand-like sample resin is increased from an initial speed of 1.0 m/minute to a speed of 200 m/minute at a constant rate in 4 minutes; and (5) a load acting on the pulley, which is equipped with a load cell, at a time when the strand-like sample resin breaks is measured as the melt tension. Further, a value of the take-up speed at the time when the strand-like sample resin breaks is defined as the drawing speed at break.

The MFR of the present modified polypropylene-based resin or the present resin composition is not particularly limited. The MFR is preferably 0.5 g/ 10 minutes to 20.0 g/ 10 minutes, more preferably 1.0 g/10 minutes to 15.0 g/10 minutes, more preferably 1.5 g/10 minutes to 10.0 g/10 minutes, even more preferably 1.5 g/10 minutes to 6.0 g, even still more preferably 1.5 g/10 minutes to 5.5 g/ 10 minutes to 5.0 g/ 10 minutes, and particularly preferably 2.0 g/ 10 minutes to 5.0 g/10 minutes. The MFR of the present modified polypropylene-based resin or the present resin composition may be not less than 2.2 g/ 10 minutes, not less than 2.4 g/ 10 minutes, not less than 2.6 g/10 minutes, not less than 2.8 g/10 minutes, or not less than 3.0 g/10 minutes. The MFR of the present modified polypropylene-based resin or the present resin composition may be not more than 4.8 g/10 minutes, not more than 4.6 g/ 10 minutes, not more than 4.4 g/10 minutes, not more than 4.2 g/10 minutes, or not more than 4.0 g/ 10 minutes. (a) In a case where the MFR of the present modified polypropylene-based resin is not less than 0.5 g/ 10 minutes, the modified polypropylene-based resin has the advantage that the modified polypropylene-based resin can provide an in-mold expanded product which is less deformed and which has a good surface property (beautiful surface). Meanwhile, (b) in a case where the MFR of the present modified polypropylene-based resin is not more than 20.0 g/ 10 minutes, the modified polypropylene-based resin has the advantage that when the composition containing the modified polypropylene-based resin is extruded and foamed, the foamability of the composition is favorable. The use of the present resin composition instead of the present modified polypropylene-based resin has the same advantage. It is preferable that the present modified polypropylene-based resin or the present resin composition have a melt tension of 8.0 cN to 12.0 cN, a drawing speed at break of not more than 7.0 m/min, and an MFR of 0.5 g/ 10 minutes to 20.0 g/ 10 minutes.

In the present specification, the MFR of the present modified polypropylene-based resin or the present resin composition can be measured in the same manner as the value of the MFR of the polypropylene-based resin (A), except that the present modified polypropylene-based resin or the present resin composition is used instead of the polypropylene-based resin (A).

A shape and a size of the present modified polypropylene-based resin or the resin composition are not limited to any particular ones. The present modified polypropylene-based resin or the present composition may be in the form of, for example, pellets. In the present specification, the pellets mean a material obtained by granulation of a polymer (resin) into small pieces of molded material which have substantially constant length and thickness in, for example, a cylindrical shape, a spherical shape, an elliptic-cylindrical shape, or a polygonal prism shape (e.g., triangular prism, quadratic prism, pentagonal prism, or hexagonal prism). The size of the pellets is not particularly limited, provided that the pellets can be handled. The size can be, for example, approximately 2.5 mm to 3.5 mm in length and 2.5 mm to 3.5 mm in thickness.

(Applications)

Examples of applications of the present modified polypropylene-based resin or the present resin composition include extruded foamed particles and an extruded foamed sheet. By extruding and foaming a composition containing the present modified polypropylene-based resin and a blowing agent, it is possible to obtain extruded foamed particles or an extruded foamed sheet. The present modified polypropylene-based resin can be used in injection foam molding, such as core-back molding, by using the modified polypropylene-based resin and the blowing agent. The present modified polypropylene-based resin has a high melt tension, and therefore there is the advantage that a film obtained by molding the modified polypropylene-based resin into a film shape is not easily torn. Therefore, the present modified polypropylene-based resin can be used in a non-foamed film and in surface coating of paper. The present modified polypropylene-based resin can be used also in normal injection molding (non-foaming). The present resin composition can be used in the same manner as the present modified polypropylene-based resin.

[2. Production method of modified polypropylene-based resin or resin composition]

A method in accordance with an embodiment of the present invention for producing a modified polypropylene-based resin (B1) includes a melt-kneading step of melt-kneading a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

A method in accordance with an embodiment of the present invention for producing a resin composition includes a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator. The ethylene-based polymer (C) contains an ethylene-$\alpha$-olefin elastomer (C1) and/or an ethylene-based polymer (C2) which has a peak at a temperature of 120°C to 140°C in a DSC curve that is obtained by a differential scanning calorimetry. As described above, the polypropylene-based resin (A) to be reacted with the aforesaid ethylene-based polymer (C) may be the above-described polypropylene-based resin (A1) which contains, in the molecule, an ethylene homopolymerization unit, or may be another polypropylene-based resin.

In the present specification, the "method in accordance with an embodiment of the present invention for producing modified polypropylene-based resin" and the "method in accordance with an embodiment of the present invention for producing a resin composition" may be collectively referred to as the "present production method".

According to the present production method, it is possible to obtain a modified polypropylene-based resin or a resin composition having a high melt tension. That is, the present production method can provide the modified polypropylene-based resin or the resin composition described in the above section [1. Modified polypropylene-based resin or resin composition]. Further, the modified polypropylene-based resin obtained by the present production method has the advantage of making it possible to provide polypropylene-based resin extruded foamed particles having a low open cell ratio. Furthermore, the present production method also provides the advantage of making it possible to provide a modified polypropylene-based resin having a high melt tension, even in a case where the amount of the radical polymerization initiator used is decreased as compared to a conventional amount of the radical polymerization initiator used. That is, the present production method also has the advantage that a modified polypropylene-based resin having a high melt tension is obtained less expensively as compared to a conventional production method. The same advantages as described above can be obtained in a case where the resin composition is obtained by the present production method. Hereinafter, the modified polypropylene-based resin may be read as the resin composition.

(Production device)

A production device used in the present production method includes, for example, a die and a melt-kneading section that includes a screw. The melt-kneading section can be a single screw extruder having a single screw, or a multiple-screw extruder having a plurality of screws (e.g., a twin screw extruder having two screws). Among these devices, the multiple-screw extruder is preferably used, and a twin screw extruder is more preferably used as the melt-kneading section, from the viewpoint of continuous kneading and scale-up.

The die provided in the production device used in the present production method is located at an end of the production device in an extruding direction, and includes at least one hole (which hereinafter may be referred to as a discharge hole) for discharging a modified polypropylene-based resin. The number and diameter of holes provided in the die and a thickness of the die (a length of the hole in the extruding direction) are not particularly limited.

(Melt-kneading step)

The melt-kneading step is a step of feeding, to the melt-kneading section, a "raw material for a modified polypropylene-based resin" containing a polypropylene-based resin (A), a conjugated diene compound, and a radical polymerization initiator, and melt-kneading the resin mixture containing these raw materials in the melt-kneading section. Melt-kneading carried out in the melt-kneading step indicate kneading, in the melt-kneading section, the resin mixture containing the polypropylene-based resin (A) and the conjugated diene compound with the radical polymerization initiator at a temperature at which the polypropylene-based resin (A) can be melted. Here, in an embodiment, the above-described ethylene-based polymer (C) is contained in the raw materials and in the resin mixture. The melt-kneading step can be also referred to as a step of preparing (obtaining) a modified polypropylene-based resin by causing the conjugated diene compound and the radical polymerization initiator to react with the polypropylene-based resin (A) (and the ethylene-based polymer (C)). Note that as described above, the ethylene-based polymer (C) may be polymerized in advance with the polypropylene-based resin (A) as described above. For an aspect of each of the polypropylene-based resin (A), the ethylene-based polymer (C), the conjugated diene compound, the radical polymerization initiator, and another component(s), the description given in the section [1. Modified polypropylene-based resin or resin composition] can be referred to as appropriate.

The melt-kneading step means a period from a time point at which an unmelted polypropylene-based resin (A) and/or the ethylene-based polymer (C) is introduced into the melt-kneading section to a time point at which the resulting modified polypropylene-based resin is caused to enter the die from the melt-kneading section.

In the melt-kneading step, it is only necessary that the modified polypropylene-based resin be ultimately prepared. With regard to the melt-kneading step, a modified polypropylene-based resin is prepared by feeding a polypropylene-based resin (A), a conjugated diene compound, and a radical polymerization initiator to a raw material feeding opening of the melt-kneading section and melt-kneading these raw materials, a specific aspect of such preparation of the modified propylene-based resin is not particularly limited, and can be, for example, any of the following methods (a1) through (a4) (note that in an embodiment, the ethylene-based polymer (C) is fed together with the polypropylene-based resin (A)).

(a1) A resin mixture is prepared by mixing an unmelted polypropylene-based resin (A), a conjugated diene compound, and a radical polymerization initiator simultaneously or in random order. Subsequently, the resin mixture is fed to the melt-kneading section, the resin mixture is melt-kneaded, and thus a modified polypropylene-based resin is prepared.

(a2) An unmelted polypropylene-based resin (A) is fed to the melt-kneading section, and this polypropylene-based resin (A) is melt-kneaded. After that, to the polypropylene-based resin (A) which has been melt-kneaded, a conjugated diene compound and a radical polymerization initiator are fed through the same raw material feeding opening or separate raw material feeding openings which are provided in the middle of the melt-kneading section, the resin mixture thus obtained is further melt-kneaded, and a modified polypropylene-based resin is thus prepared.

(a3) An unmelted polypropylene-based resin (A) and a radical polymerization initiator are fed to the melt-kneading section through the same raw material feeding opening or separate raw material feeding openings of the melt-kneading section, and the polypropylene-based resin (A) and the radical polymerization initiator are melt-kneaded. After that, to the melt-kneaded mixture of the polypropylene-based resin (A) and the radical polymerization initiator, a conjugated diene compound is fed through a raw material feeding opening which is provided in the middle of the melt-kneading section, the resin mixture thus obtained is further melt-kneaded, and a modified polypropylene-based resin is thus prepared.

(a4) An unmelted polypropylene-based resin (A) and a conjugated diene compound are fed to the melt-kneading section through the same raw material feeding opening or separate raw material feeding openings of the melt-kneading section, and the polypropylene-based resin (A) and the conjugated diene compound are melt-kneaded. After that, to the melt-kneaded mixture of the polypropylene-based resin (A) and the conjugated diene compound, a radical polymerization initiator is fed through a raw material feeding opening provided in the middle of the melt-kneading section, the obtained resin mixture is further melt-kneaded, and a modified polypropylene-based resin is thus prepared.

In a case where another component or other components are used as necessary in the present production method, a timing of feeding the another component or other components to the melt-kneading section is not particularly limited. The another component or other components may be added, in (a1), to a resin mixture which has been prepared in advance. Alternatively, the another component or other components may be fed, in (a2) to (a4), to the melt-kneading section through a raw material feeding opening which is identical with or different from that used for the unmelted polypropylene-based resin (A), the ethylene-based polymer (C), the conjugated diene compound, or the radical polymerization initiator, and may be fed together with or separately from these raw materials.

Since the polypropylene-based resin (A) in the resin mixture is in a melted state at a time point at which the reaction of the radical polymerization initiator is initiated, it is preferable to adopt any of the methods (a2) to (a4). Depending on properties of the radical polymerization initiator and the conjugated diene compound used, the raw material feeding is more preferably carried out by the method (a3) from the viewpoint of safety.

(Discharging step)

The present production method may include a discharging step of discharging, from the die, a modified polypropylene-based resin obtained by melt-kneading the resin mixture. The discharging step means a period from a time point at which the modified polypropylene-based resin is caused to enter the die from the melt-kneading section to a time point at which the modified polypropylene-based resin is discharged from the die.

In the discharging step, the modified polypropylene-based resin is discharged in a strand shape from the die at a temperature at which the modified polypropylene-based resin can be discharged from the hole of the die. The modified polypropylene-based resin having a strand shape which has been discharged (also referred to simply as a "strand") is cooled and chopped, so that a modified polypropylene-based resin having intended shape and size can be obtained. A method of cooling the strand is not limited to any particular one. For example, water cooling in which water is used can be adopted. The strand may be chopped after being cooled or may be cooled and chopped simultaneously.

[3. Polypropylene-based resin extruded foamed particles]

The polypropylene-based resin extruded foamed particles in accordance with an embodiment of the present invention are obtained by extrusion foaming of the modified polypropylene-based resin or the resin composition described in [1. Modified polypropylene-based resin or resin composition]. It can be said that the polypropylene-based resin extruded foamed particles in accordance with an embodiment of the present invention contain the modified polypropylene-based resin or the resin composition described in [1. Modified polypropylene-based resin or resin composition].

The polypropylene-based resin extruded foamed particles in accordance with an embodiment of the present invention may be configured as follows: polypropylene-based resin extruded foamed particles obtained by extrusion foaming of a modified polypropylene-based resin (B1), the modified polypropylene-based resin (B1) being obtained by a reaction of a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

Further, polypropylene-based resin extruded foamed particles in accordance with another embodiment of the present invention may be configured as follows: Polypropylene-based resin extruded foamed particles obtained by extrusion foaming of a resin composition containing a modified polypropylene-based resin (B), the resin composition being obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and the ethylene-based polymer (C) containing at least one selected from the group consisting of an ethylene-α-olefin elastomer (C1) and an ethylene-based polymer (C2) which has a peak at a temperature of 120°C to 140°C in a DSC curve that is obtained by a differential scanning calorimetry.

In the present specification, the "polypropylene-based resin extruded foamed particles" may be also referred to as "extruded foamed particles", and the "polypropylene-based resin extruded foamed particles produced by the production method described in the section [4. Method of producing extruded foamed polypropylene-based resin particles]", i.e., the "polypropylene-based resin extruded foamed particles in accordance with an embodiment of the present invention" may be also referred to as "the present extruded foamed particles".

The present extruded foamed particles have the above described feature, and therefore have the advantage of a low open cell ratio.

(Open cell ratio)

It is more preferable that the open cell ratio of the extruded foamed particles be lower. The open cell ratio of the present extruded foamed particles is not more than 28.0%, preferably not more than 27.0%, even more preferably not more than 26.0%, and particularly preferably not more than 25.0%. The lower limit of the open cell ratio of the present extruded foamed particles is not particularly limited, and is, for example, not less than 0.0%. According to this feature, the following advantages are obtained: (a) during molding of extruded foamed particles, cells are hardly broken and shrunk, so that the extruded foamed particles have excellent moldability; and (b) an in-mold expanded product obtained with use of the extruded foamed particles more exhibits characteristics such as the capability of being formed in any shape, shock-absorbing properties, lightweight properties, compressive strength, and heat insulating properties.

In the present specification, the open cell ratio of the polypropylene-based resin extruded foamed particles is determined by measurement with use of an air-comparison pycnometer [Model 1000, available from Tokyo Science Co., Ltd.], in accordance with a method described in PROCEDURE C of ASTM D2856-87. Specifically, the open cell ratio of the extruded foamed particles is calculated by carrying out the following (1) to (4) in sequence: (1) the volume $Vc$ (cm$^3$) of the extruded foamed particles is measured with use of the air-comparison pycnometer; (2) subsequently, all of the extruded foamed particles after the measurement of the $Vc$ are submerged in ethanol contained in a graduated cylinder; (3) thereafter, the apparent volume $Va$ (cm$^3$) of the extruded foamed particles is determined from the amount of rise in position of the ethanol in the graduated cylinder; and (4) the open cell ratio of the extruded foamed particles is calculated by the following expression:

$$\text{Open cell ratio (\%)} = ((Va - Vc) \times 100)/Va.$$

Note that this method of measuring the volume $Va$ is also referred to as a submersion method.

(Expansion ratio)

The expansion ratio of the present extruded foamed particles is preferably 2 times to 45 times, more preferably 3 times to 40 times, even more preferably 3 times to 30 times, and particularly preferably 3 times to 25 times. According to this feature, the following advantage is obtained: a polypropylene-based resin in-mold expanded product obtained with use of the extruded foamed particles more exhibits characteristics such as the capability of being molded in any shape, shock-absorbing properties, lightweight properties, and heat insulating properties. In a case where the expansion ratio of the extruded foamed particles obtained by production of the extruded foamed particles does not reach the above range, it is possible to use a method of increasing the expansion ratio by (i) pressurizing, with use of an inert gas, the insides of the extruded foamed particles which have been obtained and then (ii) heating the extruded foamed particles (for example, a method disclosed in Japanese Patent Application Publication, Tokukaihei, No. 10-237212).

In the present specification, the expansion ratio of the polypropylene-based resin extruded foamed particles is calculated by the following method: (1) a weight w (g) of the extruded foamed particles is measured; (2) next, the extruded foamed particles used to measure the weight are submerged in ethanol in a graduated cylinder, and a volume v (cm³) of the extruded foamed particles is measured on the basis of a rise in liquid surface position in the graduated cylinder; (3) the weight w (g) is divided by the volume v (cm³), and a density $\rho_1$ of the extruded foamed particles is calculated; and (4) a density $\rho_2$ of a base resin of the extruded foamed particles is divided by the density $\rho_1$ of the extruded foamed particles ($\rho_2/\rho_1$), and a resulting value is defined as the expansion ratio. In the present specification, the base resin can be regarded as a resin component that substantially constitutes the extruded foamed particles. The density $\rho_2$ of the base resin may be a density of 0.9 g/cm³ of a common polypropylene-based resin.

[4. Method of producing extruded foamed polypropylene-based resin particles]

The method in accordance with an embodiment of the present invention for producing polypropylene-based resin extruded foamed particles includes an extrusion foaming step of extruding and foaming the above-described modified polypropylene-based resin or resin composition. Specifically, the method in accordance with an embodiment of the present invention for producing polypropylene-based resin extruded foamed particles include: a first step of melt-kneading (a) a modified polypropylene-based resin or a resin composition which has been obtained by the method described in the section [2. Production method of modified polypropylene-based resin or resin composition] or a modified polypropylene-based resin or a resin composition described in the section [1. Modified polypropylene-based resin or resin composition] and (b) a blowing agent; and a second step of discharging, through a die, a composition obtained in the first step to a region having a pressure lower than an internal pressure of the production device. Hereinafter, the modified polypropylene-based resin may be read as the resin composition.

The method in accordance with an embodiment of the present invention for producing polypropylene-based resin extruded foamed particles may be configured as follows: a method for producing polypropylene-based resin extruded foamed particles, including: a melt-kneading step of melt-kneading a polypropylene-based resin (A1), a conjugated diene compound, and a radical polymerization initiator to obtain a modified polypropylene-based resin (B1); and an extrusion foaming step of extruding and foaming the modified polypropylene-based resin (B1), the polypropylene-based resin (A1) containing, in a molecule thereof, an ethylene homopolymerization unit, the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%, and the extrusion foaming step including: a first step of melt-kneading, in a production device, the modified polypropylene-based resin (B1) and a blowing agent; and a second step of discharging a composition obtained in the first step, through a die into a region having a pressure lower than an internal pressure of the production device.

Further, the method in accordance with another embodiment of the present invention for producing polypropylene-based resin extruded foamed particles may be configured as follows: a method for producing polypropylene-based resin extruded foamed particles, including: a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator to obtain a resin composition containing a modified polypropylene-based resin (B); and an extrusion foaming step of extruding and foaming the resin composition, the ethylene-based polymer (C) containing at least one selected from the group consisting of an ethylene-α-olefin elastomer (C1) and an ethylene-based polymer (C2) which has a peak at a temperature of 120°C to 140°C in a DSC curve that is obtained by a differential scanning calorimetry, and the extrusion foaming step including: a first step of melt-kneading, in a production device, the resin composition and a blowing agent; and a second step of discharging a composition obtained in the first step, through a die into a region having a pressure lower than an internal pressure of the production device.

(First step)

The first step will be described in detail. Specific examples of the first step include a step of melting the modified polypropylene-based resin and dissolving the blowing agent in the modified polypropylene-based resin in the production device. The first step can be also referred to as a step of preparing a melt-kneaded material of a composition containing the modified polypropylene-based resin and the blowing agent.

The blowing agent used in an embodiment of the present invention is not particularly limited, and a known organic blowing agent and a known inorganic blowing agent can be used. Examples of the organic blowing agent include aliphatic hydrocarbons such as propane and butane, and fluorinated hydrocarbons such as difluoroethane. Examples of the inorganic blowing agents include inorganic gases such as carbon dioxide, air, and nitrogen, and water. Each of these blowing agents may be used solely or two or more of these blowing agents may be used in combination. An amount of the blowing agent used in the first step only needs to be adjusted as appropriate depending on a kind of the blowing agent and in accordance with a target expansion ratio of the polypropylene-based resin extruded foamed particles.

In the first step, it is possible, as necessary, to further use a cell nucleating agent, a stabilizer (e.g., an antioxidant, a metal deactivator, a phosphorous processing stabilizer, an ultraviolet absorber, an ultraviolet stabilizer, a fluorescent brightening agent, metallic soap, an antacid adsorbent, and the like), and an additive (e.g., a coloring agent, a crosslinking agent, a chain transfer agent, a lubricant, a plasticizer, a filler, a reinforcer, a pigment, a dye, a flame retardant, an antistatic agent, and the like).

In the first step, the modified polypropylene-based resin and the blowing agent, as well as another component or other components that can be optionally used, may be mixed before being fed to the production device or may be mixed in the production device. In other words, in the first step, a composition may be fed to the production device or a composition may be prepared (completed) in the production device. In the first step, there is no particular limitation for (i) a method and order in which the modified polypropylene-based resin, the blowing agent, and another component or other components that can be optionally used are mixed or (ii) a method and order in which the modified polypropylene-based resin, the blowing agent, and another component or other components that can be optionally used are fed to the production device.

The composition obtained in the first step may be cooled prior to extrusion of the composition into the region having a low pressure.

(Second step)

The second step is a step in which the composition obtained in the first step, i.e., a melt-kneaded composition, is extruded through a die to a region having a pressure lower than an internal pressure of the production device, and the extruded composition is chopped. Through the second step, extruded foamed particles are obtained. Therefore, the second step can be also referred to as a granulation step of granulating polypropylene-based resin extruded foamed particles.

In the second step, the region where the composition obtained in the first step is extruded is not particularly limited, provided that the pressure of the region is lower than the internal pressure of the production device. For example, in the second step, the composition obtained in the first step may be extruded to a gas phase or may be extruded to a liquid phase.

The composition which has been extruded to the region having a pressure lower than the internal pressure of the production device in the second step immediately begins to be foamed. In the second step, the composition which is being foamed may be chopped, or the composition which has finished being foamed may be chopped. In a case where the composition which is foamed is chopped, the chopped composition can complete being foamed in the region where the composition is extruded.

Depending on the region where the composition obtained in the first step is extruded and the method of chopping the composition, the second step (granulation step) can be roughly classified into two types, i.e., a cold cutting method and a die face cutting method. The cold cutting method encompasses a method in which (i) the composition which contains the blowing agent and has been extruded through the die is foamed and (ii) a strand of a foamed body thus obtained is taken up and then finely cut while being cooled in a water tank (strand cut method). The die face cutting method is a method in which a composition which has been extruded from a hole of die is cut with use of a cutter which rotates while being in contact with a die surface or while securing a small gap with respect to the die surface.

The die face cutting method is further classified into the following three methods on the basis of a difference in cooling method: an underwater cutting (which hereinafter may be referred to as "UWC") method; a watering cutting (which hereinafter may be referred to as "WRC") method; and a hot cutting (which hereinafter may be referred to as "HC") method. The UWC method is a method in which (i) a chamber attached to a leading end of a die is filled with a cooling water, which has been adjusted to have a predetermined pressure, so that the cooling water is in contact with a resin discharge surface of the die and (ii) a composition which has been extruded from a hole of the die is cut in water. The WRC method is a method in which a cooling drum that is connected to a die and that has an inner peripheral surface along which cooling water flows is disposed at the downstream side of the die, and a composition which has been cut with a cutter in air is cooled in the cooling water while being foamed or after being foamed. The HC method is a method in which a composition which has been cut with a cutter in air is cooled in air while being foamed or after being foamed. The HC method also includes a mist cutting method that further includes a step of spraying mixed mist of water and air. A granulation method in the second step is preferably at least one selected from the group consisting of the HC method, the WRC method, and the UWC method.

[5. Polypropylene-based resin in-mold expanded product]

A polypropylene-based resin in-mold expanded product in accordance with an embodiment of the present invention is formed by molding the polypropylene-based resin extruded foamed particles described in the section [3. Polypropylene-based resin extruded foamed particles].

In the present specification, the "polypropylene-based resin in-mold expanded product" may be also referred to as an "in-mold expanded product", and the "polypropylene-based resin in-mold expanded product in accordance with an embodiment of the present invention" may be also referred to as the "present in-mold expanded product". In some cases, the in-mold expanded product obtained by production with use of a mold is referred to as an in-mold expanded product.

The polypropylene-based resin in-mold expanded product in accordance with an embodiment of the present invention is arranged as described above. Therefore, the polypropylene-based resin in-mold expanded product has a high expansion ratio and excellent fusibility.

[6. Method of producing polypropylene-based resin in-mold expanded product]

A method in accordance with an embodiment of the present invention for producing a polypropylene-based resin in-mold expanded product includes a heating step of heating the polypropylene-based resin extruded foamed particles obtained by the method described in the section [4. Method of producing extruded foamed polypropylene-based resin particles] or the polypropylene-based resin extruded foamed particles described in the section [3. Polypropylene-based resin extruded foamed particles] in a molding space, which is formed by at least two molds included in a mold, after filling the molding space with the aforesaid polypropylene-based resin extruded foamed particles.

In the method in accordance with an embodiment of the present invention for producing a polypropylene-based resin in-mold expanded product, the mold to be used is not particularly limited. The mold can include, for example, a fixed mold that cannot be moved and a movable mold that can be moved, as the at least two molds. When the movable mold approaches the fixed mold, the molding space is formed inside the fixed mold and the movable mold. Note that, when the extruded foamed particles in the molding space are heated, a mold frame of the fixed mold can be in contact with a mold frame of the movable mold (i.e., the mold can be closed but is not sealed). Meanwhile, when filling the molding space with the extruded foamed particles, the mold frame of the fixed mold and the mold frame of the movable mold may not be in contact with each other, and a small gap (also referred to as crash gap filling) may be formed between the mold frame of the fixed mold and the mold frame of the movable mold.

In the method in accordance with an embodiment of the present invention for producing a polypropylene-based resin in-mold expanded product, a method of filling the molding space with polypropylene-based resin extruded foamed particles and a method of heating the polypropylene-based resin extruded foamed particles in the mold are not particularly limited. Examples of the methods include the following methods (c1) through (c4).

(c1) Extruded foamed particles are pressurized with an inorganic gas in a pressure vessel, and the extruded foamed particles are impregnated with the inorganic gas, and a predetermined inner pressure is applied to the extruded foamed particles. After that, a molding space of a mold is filled with the extruded foamed particles, and the extruded foamed particles in the molding space are heated with steam.

(c2) A molding space of a mold is filled with extruded foamed particles. Next, the extruded foamed particles in the molding space are compressed so as to reduce a volume in the molding space by 10% to 75%, and then the extruded foamed particles in the molding space are heated with steam.

(c3) Extruded foamed particles are filled into the molding space of a mold while being compressed by gas pressure. Subsequently, the extruded foamed particles in the molding space are heated with steam while utilizing resilience of the extruded foamed particles in the molding space.

(c4) A molding space of a mold is filled with the extruded foamed particles which have not been particularly pretreated. Subsequently, the extruded foamed particles in the molding space are heated with steam.

In the production of the present in-mold expanded product, a pressure of the steam (which hereinafter may be referred to as a molding pressure) for heating the extruded foamed particles varies depending on characteristics of the extruded foamed particles used, and cannot be generally defined.

In the method (c1), at least one kind selected from the group consisting of air, nitrogen, oxygen, carbon dioxide, helium, neon, argon, and the like can be used as the inorganic gas. Among these inorganic gases, air and/or carbon dioxide is/are preferable.

An inner pressure of the foamed particles in the method (c1) is preferably 0.05 MPa to 0.30 MPa (gage pressure) and preferably 0.06 MPa to 0.25 MPa (gage pressure).

In the method (c1), when the foamed particles with the inorganic gas is impregnated, a temperature in the pressure vessel is preferably 10°C to 90°C, and more preferably 40°C to 90°C.

An embodiment of the present invention can be arranged as follows.

[1-1] Polypropylene-based resin extruded foamed particles obtained by extrusion foaming of a modified polypropylene-based resin (B1), the modified polypropylene-based resin (B1) being obtained by a reaction of a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

[1-2] The polypropylene-based resin extruded foamed particles according to [1-1], wherein the modified polypropylene-based resin (B1) has a melt tension of 8.0 cN to 12.0 cN and has a drawing speed at break of not less than 3.5 m/min and not more than 7.0 m/min.

[1-3] The polypropylene-based resin extruded foamed particles according to [1-1] or [1-2], wherein the modified polypropylene-based resin (B1) has a melt flow rate of 0.5 g/10 minutes to 20.0 g/10 minutes.

[1-4] Polypropylene-based resin extruded foamed particles obtained by extrusion foaming of a resin composition containing a modified polypropylene-based resin (B), the resin composition being obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry.

[1-5] The polypropylene-based resin extruded foamed particles according to [1-4], wherein the resin composition has a melt tension of 8.0 cN to 12.0 cN and has a drawing speed at break of not less than 3.5 m/min and not more than 7.0 m/min.

[1-6] The polypropylene-based resin extruded foamed particles according to [1-4] or [1-5], wherein the resin composition has a melt flow rate of 0.5 g/10 minutes to 20.0 g/ 10 minutes.

[1-7] The polypropylene-based resin extruded foamed particles according to any one of claims [1-4] to [1-6], wherein the polypropylene-based resin (A) is at least one selected from the group consisting of: a homopolymer of propylene, a block polymer of propylene and a monomer other than propylene; and a random copolymer of propylene and a monomer other than propylene.

[1-8] The polypropylene-based resin extruded foamed particles according to any one of [1-4] to [1-7], wherein the polypropylene-based resin (A) has a melting point of 130°C to 165°C.

[1-9] The polypropylene-based resin extruded foamed particles according to any one of [1-4] to [1-8], wherein the ethylene-$\alpha$-olefin elastomer (C1) is at least one selected from the group consisting of (i) an ethylene-$\alpha$-olefin copolymer, (ii) an ethylene-$\alpha$-olefin-nonconjugated diene copolymer, and (iii) a graft copolymer consisting of a main chain and a side chain.

[1-10] The polypropylene-based resin extruded foamed particles according to any one of [1-4] to [1-9], wherein the ethylene-based polymer (C2) which has a peak at a temperature of 120°C to 140°C in the DSC curve has a density of not less than 0.925 g/cm$^3$ and not more than 0.97 g/cm$^3$.

[1-11] The polypropylene-based resin extruded foamed particles according to any one of [1-1] to [1-10], having an open cell ratio of not more than 28.0%.

[1-12] The polypropylene-based resin extruded foamed particles according to any one of [1-1] to [1-11], wherein the radical polymerization initiator is an organic peroxide.

[1-13] The polypropylene-based resin extruded foamed particles according to [1-12], wherein the organic peroxide is at least one selected from the group consisting of ketone peroxide, peroxyketal, hydroperoxide, dialkyl peroxide, diacyl peroxide, peroxy dicarbonate, and peroxy ester.

[1-14] The polypropylene-based resin extruded foamed particles according to any one of [1-1] to [1-13], having an expansion ratio of 2 times to 45 times.

[1-15] A polypropylene-based resin in-mold expanded product obtained by molding polypropylene-based resin extruded foamed particles according to any one of [1-1] to [1-14].

[1-16] A method for producing polypropylene-based resin extruded foamed particles, including: a melt-kneading step of melt-kneading a polypropylene-based resin (A1), a conjugated diene compound, and a radical polymerization initiator to obtain a modified polypropylene-based resin (B1); and an extrusion foaming step of extruding and foaming the modified polypropylene-based resin (B1), the polypropylene-based resin (A1) containing, in a molecule thereof, an ethylene homopolymerization unit, the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%, and the extrusion foaming step including: a first step of melt-kneading, in a production device, the modified polypropylene-based resin (B1) and a blowing agent; and a second step of discharging a composition obtained in the first step, through a die into a region having a pressure lower than an internal pressure of the production device.

[1-17] The method according to [1-16], wherein an amount of the radical polymerization initiator used is 0.40 parts by weight to 1.00 part by weight relative to 100 parts by weight of the polypropylene-based resin (A1).

[1-18] The method according to [1-16] or [1-17], wherein an amount of the conjugated diene compound used is 0.20 parts by weight to 1.50 parts by weight relative to 100 parts by weight of the polypropylene-based resin (A1).

[1-19] A method for producing polypropylene-based resin extruded foamed particles, including: a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator to obtain a resin composition containing a modified polypropylene-based resin (B); and an extrusion foaming step of extruding and foaming the resin composition, the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry, and the extrusion foaming step including: a first step of melt-kneading, in a production device, the resin composition and a blowing agent; and a second step of discharging a composition obtained in the first step, through a die into a region having a pressure lower than an internal pressure of the production device.

[1-20] The method according to [1-19], wherein an amount of the radical polymerization initiator used is 0.40 parts by weight to 1.00 part by weight relative to 100 parts by weight of the polypropylene-based resin (A).

[1-21] The method according to [1-19] or [1-20], wherein an amount of the conjugated diene compound used is 0.20 parts by weight to 1.50 parts by weight relative to 100 parts by weight of the polypropylene-based resin (A).

[1-22] The method according to any one of [1-16] to [1-21], wherein the blowing agent is at least one selected from the group consisting of aliphatic hydrocarbons, fluorinated hydrocarbons, carbon dioxide, air, nitrogen and water.

[1-23] The method according to any one of [1-16] to [1-22], wherein a granulation method in the second step is at least one selected from the group consisting of a hot cutting method, a watering cutting method, and an underwater cutting method.

Alternatively, an embodiment of the present invention can be arranged as follows.

[2-1] A modified polypropylene-based resin (B1) obtained by a reaction of a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

[2-2] The modified polypropylene-based resin (B1) according to [2-1], having a melt tension of 8.0 cN to 12.0 cN and having a drawing speed at break of not more than 7.0 m/min.

[2-3] A resin composition containing a modified polypropylene-based resin (B), the resin composition being obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry.

[2-4] The resin composition according to [2-3], having a melt tension of 8.0 cN to 12.0 cN and having a drawing speed at break of not more than 7.0 m/min.

[2-5] A method for producing a modified polypropylene-based resin (B1) including a melt-kneading step of melt-kneading a polypropylene-based resin (A1), a conjugated diene compound and a radical polymerization initiator, the polypropylene-based resin (A1) containing, in a molecule thereof, an ethylene homopolymerization unit, and the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

[2-6] A method for producing a modified polypropylene-based resin (B1) according to [2-5], wherein an amount of the radical polymerization initiator used is 0.40 parts by weight to 1.00 part by weight relative to 100 parts by weight of the polypropylene-based resin (A1).

[2-7] A method for producing a resin composition containing a modified polypropylene-based resin (B), the method including a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry.

[2-8] The method according to [2-7], wherein an amount of the radical polymerization initiator used is 0.40 parts by weight to 1.00 part by weight relative to 100 parts by weight of the polypropylene-based resin (A).

[2-9] Polypropylene-based resin extruded foamed particles obtained by extrusion foaming of a modified polypropylene-based resin (B1) according to [2-1] or [2-2] or a resin composition according to [2-3] or [2-4].

[2-10] A polypropylene-based resin in-mold expanded product obtained by molding polypropylene-based resin extruded foamed particles according to [2-9].

Examples

An embodiment of the present invention will be described in more detail through Examples and Comparative Examples. Note that an embodiment of the present invention is in no way limited to the following description.

[Raw materials]

<Polypropylene-based resin (A)>

- RD265CF (available from Borouge, ethylene content in polypropylene-based polymer unit (ethylene content excluding ethylene homopolymerization unit): 5.1% by weight, melting peak: 128°C and 152°C, and area of peak in the range of 120°C to 140°C: 3% to 30%)
- F724NPC (available from Prime Polymer Co., Ltd., random polypropylene resin, ethylene content: 2.0% by weight, and melting peak: 148°C)
- F228 (available from Prime Polymer Co., Ltd., random polypropylene resin, ethylene content: 2.8% by weight, and melting peak: 144°C)

For convenience, RD265CF is listed in the section of the polypropylene-based resin (A). However, it is inferred that RD265CF is a random polypropylene resin (polypropylene-based resin (A1)) containing, in a molecule thereof, an ethylene homopolymerization unit, or is a mixture of a random polypropylene resin (polypropylene-based resin (A)) and an ethylene-based polymer (C2). Therefore, a melting peak at 128°C observed in a DSC curve of RD265CF that is obtained by a differential scanning calorimetry is a peak which is derived from the ethylene homopolymerization unit contained in the molecule of RD265CF or a peak which is derived from the ethylene-based polymer (C2) contained in RD265CF which is a mixture.

Methods of measuring the melting peak and the area of peak will be described later.

<Ethylene-based polymer (C)>

- TAFMER DF7350 (available from Mitsui Chemicals Inc., ethylene-1-butene copolymer, density: 0.870 g/cm$^3$, and Shore A: 70)
- TAFMER DF840 (available from Mitsui Chemicals Inc., ethylene-1-butene copolymer, density: 0.885 g/cm$^3$, and Shore A: 86)
- TAFMER DF9200 (available from Mitsui Chemicals Inc., ethylene-1-butene copolymer, density: 0.893 g/cm$^3$, and Shore A: 92)
- NOVATEC HD HJ490 (available from Japan Polyethylene Corporation, HDPE, density: 0.958 g/cm$^3$, and melting peak: 133°C)
- UMERIT 613A (available from Ube-Maruzen Polyethylene Co., Ltd., LLDPE, density: 0.913 g/cm$^3$, and melting peak: 113°C)
- UBE Polyethylene J3524 (available from Ube-Maruzen Polyethylene Co., Ltd., LDPE, density: 0.924 g/cm$^3$, and melting peak: 112°C)

The ethylene-1-butene copolymer corresponds to an ethylene-$\alpha$-olefin elastomer (C1). The HDPE, LLDPE, and LDPE each correspond to an ethylene homopolymer. The HDPE corresponds to the ethylene-based polymer (C2) having a peak at a temperature of 120°C to 140°C in the DSC curve. A method of measuring the melting peak of the ethylene homopolymer will be described later.

<Radical polymerization initiator>

- PERBUTYL I (available from NOF CORPORATION)

<Conjugated diene compound>

- Isoprene

[Measurement and evaluation methods]

<Ethylene content in ethylene-based polymer (C)>

The ethylene content in TAFMER series, which is an ethylene-1-butene copolymer available from Mitsui Chemicals Inc., was determined on the basis of an approximate expression generated from a relationship between a butene content and a density of each of TAFMER DF640 and TAFMER DF840. It is inferred, from physical properties of TAFMER DF640, that TAFMER DF640 is equivalent to the ethylene-butene 1 copolymer (density: 0.864 g/cm$^3$) disclosed in Examples of Japanese Patent Application Publication Tokukai No. 2019-172961. Therefore, for TAFMER DF640, the ethylene content was assumed to be 80% by weight and the butene content was assumed to be 20% by weight. It is inferred, from physical properties of TAFMER DF840, that TAFMER DF840 is equivalent to the ethylene-butene 1 copolymer (density: 0.885 g/cm$^3$) disclosed in Examples of Japanese Patent Application Publication Tokukai No. 2019-172961. Therefore, for TAFMER DF870, the ethylene content was assumed to be 90% by weight and the butene content was assumed to be 10% by weight.

Here, Engage, which is available from Dow Chemical Company and which is an ethylene-octene copolymer, is known to have a correlation between octene content and density. The TAFMER series is an ethylene-1-butene copolymer, and is, like Engage, an ethylene-$\alpha$-olefin elastomer. This suggests the presence of a correlation between the butene content and the density in TAFMER. Therefore, an approximate expression for the correlation between the butene content and the density in the TAFMER series was calculated from the above-described values of TAFMER DF640 and TAFMER DF840. The approximate expression was as follows:

$$\text{Butene content [\% by weight]} = -476.19 \times \text{density [g/cm}^3\text{]} + 431.43$$

On the basis of this approximation expression, the butene content was calculated from the density for each of TAFMER DF9200 and TAFMER DF7350. Further, the ethylene content was calculated from this butene content.

NOVATEC HD HJ490, UMERIT613A, and UBE Polyethylene J3524 are each an ethylene homopolymer, and therefore, the ethylene content for these is 100% by weight.

<Melting peak and area of peak in DSC curve>

For RD265CF, the melting peak in the DSC curve was determined with use of a differential scanning calorimeter (available from Seiko Instruments Inc., type DSC6200) by the following procedure: (1) the temperature of 5 mg to 6 mg of RD265CF was increased from 40°C to 220°C at a temperature increase rate of 10°C/min, so that RD265CF was melted; (2) thereafter, the temperature of the RD265CF thus melted was decreased from 220°C to 40°C at a temperature decrease rate of 10°C/min, so that the RD265CF was crystallized; and (3) then, the temperature of the RD265CF thus crystallized was further increased from 40°C to 220°C at a temperature increase rate of 10°C/min. The temperature corresponding to the peak (melting peak) in the DSC curve of RD265CF, which was obtained during the second temperature increase (i.e., in (3) above) was determined. The temperature of the melting peak was similarly determined for each of F724NPC and E228 and the ethylene homopolymer.

Further, for RD265CF, the area of the melting peak was determined by the following procedure. A straight line (tangent line) was drawn to connect a temperature before the start of melting and a temperature after the end of melting in the DSC curve of RD265CF which was obtained by the above method during the second temperature increase. The area surrounded by the tangent line and the DSC curve was defined as a total area of the DSC curve. A maximum point at which the largest value was obtained existed in the DSC curve between the peak which was derived from the ethylene homopolymer and the peak which was derived from the polypropylene-based polymer. The maximum point at which the value was the largest was defined as a division point. Another straight line was drawn from the division point to the tangent line at the shortest distance. The total area of the DSC curve was thus divided. Of resulting divisional areas, an area including the peak derived from the ethylene homopolymer was regarded as an area of the peak derived from the ethylene homopolymerization unit.

<Melt tension and drawing speed at break>

The melt tension was measured with use of Capilograph 1D (available from Toyo Seiki Seisaku-sho, Ltd., Japan). Hereinafter, the modified polypropylene-based resin may be read as the resin composition. Specifically, the melt tension was measured by the following (1) to (5): (1) a barrel which had a diameter of 9.55 mm and which had been heated to 200°C was filled with the modified polypropylene-based resin obtained in each of Examples and Comparative Examples; (2) next, the modified polypropylene-based resin was heated for 10 minutes in the barrel which had been heated to a test temperature (200°C); (3) subsequently, while the modified polypropylene-based resin was drawn in a strand shape from a capillary die (diameter: 1.0 mm, length: 10 mm) at a piston falling speed kept constant (10 mm/minute), this strand-like resin was caused to pass through a pulley which was for detecting a tension and which was located 350 mm below the capillary die, and then take-up of the strand-like resin was started with use of a take-up roll; (4) after drawing of the strand-like resin became stable, the take-up speed of the strand-like resin was increased from an initial speed of 1.0 m/minute to a speed of 200 m/minute at a constant rate in 4 minutes; and (5) a load acting on the pulley, which was equipped with a load cell, at a time when the strand-like resin broke was measured as the melt tension. Further, a value of the take-up speed at the time when the strand-like resin broke was defined as the drawing speed at break.

<Expansion ratio>

The expansion ratio of the polypropylene-based resin extruded foamed particles was calculated by the following method: (1) a weight w (g) of the extruded foamed particles was measured; (2) next, the extruded foamed particles used to measure the weight were submerged in ethanol in a graduated cylinder, and a volume v ($cm^3$) of the extruded foamed particles was measured on the basis of a rise in liquid surface position in the graduated cylinder; (3) the weight w (g) was divided by the volume v ($cm^3$), and a density $\rho_1$ of the extruded foamed particles was calculated; and (4) a density $\rho_2$ of a base resin of the extruded foamed particles was divided by the density $\rho_1$ of the extruded foamed particles ($\rho_2/\rho_1$), and a resulting value was defined as the expansion ratio. The density $\rho_2$ of the base resin was a density of 0.9 $g/cm^3$ of a common polypropylene-based resin.

<Open cell ratio>

The open cell ratio of the extruded foamed particles was measured with use of an air-comparison pycnometer [Model 1000, available from Tokyo Science Co., Ltd.], in accordance with a method described in PROCEDURE C of ASTM D2856-87. Specifically, the open cell ratio of the extruded foamed particles was calculated by carrying out the following (1) to (3) in sequence: (1) the volume Vc ($cm^3$) of the extruded foamed particles was measured with use of the air-comparison pycnometer; (2) subsequently, all of the extruded foamed particles after the measurement of the Vc were submerged in ethanol contained in a graduated cylinder; (3) thereafter, the apparent volume Va ($cm^3$) of the extruded foamed particles was determined from the amount of rise in position of the ethanol in the graduated cylinder; and (4) the open cell ratio of the extruded foamed particles was calculated by the following expression:

$$\text{Open cell ratio (\%)} = ((Va - Vc) \times 100)/Va$$

[Example 1]

<Production of modified polypropylene-based resin or resin composition>

A modified polypropylene-based resin or a resin composition of Example 1 (Modified PP-1) was produced as follows. After RD265CF was fed to a twin screw extruder, the radical polymerization initiator was fed, to the twin screw extruder, in an amount indicated in Table 1 relative to 100 parts by weight of RD265CF. After that, with respect to RD265CF and the radical polymerization initiator which had been melt-kneaded together, the conjugated diene compound was fed, to the twin screw extruder, in an amount indicated in Table 1 relative to 100 parts by weight of RD265CF, and thus a resin mixture was prepared in the twin screw extruder. A feeding rate of the resin mixture to the twin screw extruder was 70 kg/h. Note that the feeding rate of the resin mixture is intended to mean an amount of the resin mixture prepared per unit time in the twin screw extruder at a time point when the conjugated diene compound is fed to the twin screw extruder.

The resin mixture thus prepared was melt-kneaded in the twin screw extruder at a cylinder temperature of 180°C and a screw rotational speed of 230 rpm, and as a result, a modified polypropylene-based resin or a resin composition was obtained (melt-kneading step). The modified polypropylene-based resin or the resin composition thus obtained was discharged in a strand shape from a die at a throughput of 70 kg/h (discharging step). The modified polypropylene-based resin or the resin composition (strand) thus discharged was (a) cooled with water and then (b) chopped into pellets (cylindrical shape).

<Production of extruded foamed particles>

A resin mixture was prepared by blending 100 parts by weight of the modified polypropylene-based resin or the resin composition and 0.02 parts by weight of talc as a cell nucleating agent. Subsequently, the resin mixture was fed from a raw material feeding section to the twin screw extruder (melt-kneading section), and melt-kneading of the resin mixture was initiated at a cylinder temperature of 180°C and a screw rotational speed of 80 rpm. The feeding rate of the resin mixture to the twin screw extruder was 0.75 kg/h. In the course of melt-kneading of the resin mixture, carbon dioxide was injected as a blowing agent into the twin screw extruder through a blowing agent feeding section, and a resulting composition was further melt-kneaded. The feeding rate of the blowing agent to the twin screw extruder was 0.0375 kg/h.

The melt-kneaded composition obtained in the melt-kneading step was caused to pass through the die which was provided in a granulation section, and then was discharged at a throughput of 0.75 kg/h in an air phase having a pressure lower than an internal pressure of the production device. The extruded composition was chopped with a cutter in the air phase, so that spherical or substantially spherical polypropylene-based resin extruded foamed particles were obtained. The polypropylene-based resin extruded foamed particles thus obtained were caused to land onto a surface of water which flows on a wall of the production device, and were thus collected with use of water flow.

[Examples 2 and 3]

A resin composition of each of Examples 2 and 3 (Modified PP-2 and Modified PP-3) was produced as follows. RD265CF and the ethylene-based polymer (C) shown in Table 1 were fed to the twin screw extruder. Note that the ethylene-based polymer (C) was fed in an amount indicated in Table 1 relative to 100 parts by weight of RD265CF. Next, the radical polymerization initiator was fed, to the twin screw extruder, in an amount indicated in Table 1 relative to 100 parts by weight of RD265CF. After that, with respect to RD265CF, the ethylene-based polymer (C) and the radical polymerization initiator which had been melt-kneaded together, the conjugated diene compound was fed, to the twin screw extruder, in an amount indicated in Table 1 relative to 100 parts by weight of RD265CF. Except for the above, the resin composition and polypropylene-based resin extruded foamed particles were obtained as in Example 1.

[Examples 4 to 9 and Comparative Examples 1 and 2]

A resin composition of each of Examples 4 to 9 (Modified PP-4 to Modified PP-9) and Comparative Examples 1 and 2 (Modified PP-10 and Modified PP-11) was produced as follows. Specifically, the polypropylene-based resin (A) shown in Table 1 was used instead of RD265CF, and the type and amount of the ethylene-based polymer (C) added and respective amounts of the radical polymerization initiator and the conjugated diene compound added were changed to those shown in Table 1. Except for these, the resin composition and polypropylene-based resin extruded foamed particles were obtained as in Examples 2 and 3.

[Reference Example 1 and Comparative Examples 3 to 5]

A modified polypropylene-based resin of each of Reference Example 1 (Modified PP-12) and Comparative Examples 3 to 5 (Modified PP-13 to Modified PP-15) was produced as follows. Specifically, the polypropylene-based resin (A) shown in Table 1 was used instead of RD265CF, and respective amounts of the radical polymerization initiator and the conjugated diene compound added were changed to those shown in Table 1. Except for these, the modified polypropylene-based resin and polypropylene-based resin extruded foamed particles were obtained as in Example 1.

(Evaluation results)

Table 1 shows the composition and physical properties of each of Modified PP-1 to Modified PP-15.

[Table 1]

| (Table 1) | Polypropylene-based resin (A) | Ethylene-based polymer (C) | | | Amount of radical polymerization initiator added (parts by weight) | Amount of conjugated diene compound added (parts by weight) | Modified polypropylene-based resin or resin composition | | |
|---|---|---|---|---|---|---|---|---|---|
| | | Type | Added amount (parts by weight) | Ethylene content (% by weight) | | | MFR (g/10 min) | Melt tension (cN) | Drawing at break (m/min) |
| Example 1 (Modified PP-1) | RD265CF | - | - | - | 0.6 | 0.30 | 2.2 | 10.2 | 3.8 |
| Example 2 (Modified PP-2) | RD265CF | TAFMER DF7350 | 0.5 | 83 | 0.7 | 0.42 | 2.4 | 9.0 | 4.2 |
| Example 3 (Modified PP-3) | RD265CF | TAFMER DF7350 | 0.5 | 83 | 0.7 | 0.37 | 4.2 | 8.6 | 4.5 |
| Example 4 (Modified PP-4) | F724NPC | TAFMER DF7350 | 0.5 | 83 | 0.7 | 0.42 | 3.6 | 10.3 | 4.7 |
| Example 5 (Modified PP-5) | F724NPC | TAFMER DF7350 | 1.0 | 83 | 0.7 | 0.51 | 4.4 | 10.7 | 5.6 |
| Example 6 (Modified PP-6) | E228 | TAFMER DF7350 | 0.5 | 83 | 0.7 | 0.39 | 4.6 | 8.9 | 5.0 |
| Example 7 (Modified PP-7) | F724NPC | TAFMER DF840 | 0.5 | 90 | 0.7 | 0.46 | 2.8 | 11.8 | 4.2 |
| Example 8 (Modified PP-8) | F724NPC | NOVATEC HD HJ490 | 0.5 | 100 | 0.7 | 0.35 | 4.9 | 9.1 | 5.2 |
| Example 9 (Modified PP-9) | F724NPC | TAFMER DF9200 | 0.5 | 94 | 0.7 | 0.43 | 2.9 | 11.8 | 4.1 |
| Comparative Example 1 (Modified PP-10) | F724N PC | UMERIT 613A | 0.5 | 100 | 0.7 | 0.37 | 5.1 | 9.2 | 5.2 |
| Comparative Example 2 (Modified PP-11) | F724NPC | USE Polyethylene J3524 | 0.5 | 100 | 0.7 | 0.42 | 3.3 | 11.8 | 3.9 |

(continued)

| (Table 1) | Polypropylene-based resin (A) | Ethylene-based polymer (C) | | | Amount of radical polymerization initiator added (parts by weight) | Amount of conjugated diene compound added (parts by weight) | Modified polypropylene-based resin or resin composition | | |
|---|---|---|---|---|---|---|---|---|---|
| | | Type | Added amount (parts by weight) | Ethylene content (% by weight) | | | MFR (g/10 min) | Melt tension (cN) | Drawing at break (m/min) |
| Reference Example 1 (Modified PP-12) | F724NPC | - | - | - | 1.4 | 0.58 | 7.0 | 9.9 | 7.7 |
| Comparative Example 3 (Modified PP-13) | F724NPC | - | - | - | 0.7 | 0.45 | 9.9 | 8.2 | 9.7 |
| Comparative Example 4 (Modified PP-14) | F724NPC | - | - | - | 0.7 | 0.30 | 20.2 | 5.3 | 20.0 |
| Comparative Example 5 (Modified PP-15) | E228 | - | - | - | 1.1 | 0.60 | 10.3 | 7.7 | 8.5 |

The expansion ratio and the open cell ratio of the polypropylene-based resin extruded foamed particles obtained in each of Examples 1 to 9, Reference Example 1, and Comparative Examples 1 to 5 were measured by the above-described respective methods. Table 2 shows respective results.

[Table 2]

| (Table 2) | Modified polypropylene-based resin or resin composition | Expansion ratio (times) | Open cell ratio (%) |
|---|---|---|---|
| Example 1 | Modified PP-1 | 18.5 | 25.9 |
| Example 2 | Modified PP-2 | 19.5 | 20.9 |
| Example 3 | Modified PP-3 | 17.6 | 22.5 |
| Example 4 | Modified PP-4 | 18.4 | 26.2 |
| Example 5 | Modified PP-5 | 18.4 | 25.4 |
| Example 6 | Modified PP-6 | 20.5 | 27.9 |
| Example 7 | Modified PP-7 | 19.0 | 21.4 |
| Example 8 | Modified PP-3 | 20.6 | 27.2 |
| Example 9 | Modified PP-9 | 21.0 | 31.2 |
| Comparative Example 1 | Modified PP-10 | 16.7 | 42.6 |
| Comparative Example 2 | Modified PP-11 | 21.0 | 36.6 |
| Reference Example 1 | Modified PP-12 | 19.4 | 23.6 |
| Comparative Example 3 | Modified PP-13 | 21.2 | 79.4 |
| Comparative Example 4 | Modified PP-14 | 18.6 | 88.7 |
| Comparative Example 5 | Modified PP-15 | 18.8 | 40.7 |

The modified PP-1 corresponds to a modified polypropylene-based resin (B1) obtained with use of the polypropylene-based resin (A1) or to a resin composition obtained with use of the polypropylene-based resin (A) and the ethylene-based polymer (C2). The modified PP-2 and the modified PP-3 each correspond to a resin composition obtained with use of the polypropylene-based resin (A1) and the ethylene-$\alpha$-olefin elastomer (C1) or to a resin composition obtained with use of the polypropylene-based resin (A), the ethylene-based polymer (C2) and the ethylene-$\alpha$-olefin elastomer (C1). The modified PP-4 to the modified PP-9 each correspond to a resin composition obtained with use of the polypropylene-based resin (A) and the ethylene-$\alpha$-olefin elastomer (C1) or the ethylene-based polymer (C2). Therefore, the modified PP-1 to the modified PP-9 each have a high melt tension and a low drawing speed at break, even in a case where the amount of the radical polymerization initiator used is relatively small. Further, in each of Examples 1 to 9, with use of the modified polypropylene-based resin or the resin composition described above, it was possible to obtain foamed particles having a low open cell ratio in each of Examples 1 to 9.

On the other hand, in Comparative Examples 1 and 2 in which Modified PP-10 and Modified PP-11 each obtained with use of the ethylene-based polymer (C) that fell under neither the ethylene-$\alpha$-olefin elastomer (C1) nor the ethylene-based polymer (C2) were used, respectively, foamed particles having a high open cell ratio was obtained. In each of Comparative Examples 3 to 5 in which no ethylene-based polymer (C) was used, a modified polypropylene-based resin having a high drawing speed at break was obtained and foamed particles having a high open cell ratio were obtained. In a case where no ethylene-based polymer (C) was used, it was not possible to make the open cell ratio low unless a large amount of a radical polymerization initiator was used as in Reference Example 1.

Industrial Applicability

According to an embodiment of the present invention, it is possible to provide a novel modified polypropylene-based resin or a novel resin composition having an improved melt tension. Therefore, an embodiment of the present invention can be suitably used to obtain polypropylene-based resin extruded foamed particles having a low open cell ratio. Therefore, an embodiment of the present invention can be suitably used in the fields of automotive interior materials, shock-absorbing materials, packaging materials, heat insulating materials, and the like.

**Claims**

1. Polypropylene-based resin extruded foamed particles obtained by extrusion foaming of a modified polypropylene-based resin (B1),

   the modified polypropylene-based resin (B1) being obtained by a reaction of a polypropylene-based resin (A1), a conjugated diene compound and a radical polymerization initiator,
   the polypropylene-based resin (A1) containing, in a molecule thereof, an ethylene homopolymerization unit, and
   the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%.

2. The polypropylene-based resin extruded foamed particles according to claim 1, wherein the modified polypropylene-based resin (B1) has a melt tension of 8.0 cN to 12.0 cN and has a drawing speed at break of not more than 7.0 m/min.

3. The polypropylene-based resin extruded foamed particles according to claim 1 or 2, wherein the modified polypropylene-based resin (B1) has a melt flow rate of 0.5 g/10 minutes to 20.0 g/10 minutes.

4. Polypropylene-based resin extruded foamed particles obtained by extrusion foaming of a resin composition containing a modified polypropylene-based resin (B),

   the resin composition being obtained by a reaction of 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator, and
   the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry.

5. The polypropylene-based resin extruded foamed particles according to claim 4, wherein the resin composition has a melt tension of 8.0 cN to 12.0 cN and has a drawing speed at break of not more than 7.0 m/min.

6. The polypropylene-based resin extruded foamed particles according to claim 4 or 5, wherein the resin composition has a melt flow rate of 0.5 g/ 10 minutes to 20.0 g/10 minutes.

7. The polypropylene-based resin extruded foamed particles according to any one of claims 1 to 6, having an expansion ratio of 2 times to 45 times.

8. A polypropylene-based resin in-mold expanded product obtained by molding polypropylene-based resin extruded foamed particles according to any one of claims 1 to 7.

9. A method for producing polypropylene-based resin extruded foamed particles, comprising:

   a melt-kneading step of melt-kneading a polypropylene-based resin (A1), a conjugated diene compound, and a radical polymerization initiator to obtain a modified polypropylene-based resin (B1); and
   an extrusion foaming step of extruding and foaming the modified polypropylene-based resin (B1),
   the polypropylene-based resin (A1) containing, in a molecule thereof, an ethylene homopolymerization unit,
   the polypropylene-based resin (A1) having, in a DSC curve that is obtained by a differential scanning calorimetry, a peak which is derived from the ethylene homopolymerization unit and which is at a temperature of 120°C to 140°C, the peak having an area that is 1% to 40% relative to a total area of the DSC curve on the premise that the total area is 100%, and

the extrusion foaming step including:

a first step of melt-kneading, in a production device, the modified polypropylene-based resin (B1) and a blowing agent; and
a second step of discharging a composition obtained in the first step, through a die into a region having a pressure lower than an internal pressure of the production device.

10. The method according to claim 9, wherein an amount of the radical polymerization initiator used is 0.40 parts by weight to 1.00 part by weight relative to 100 parts by weight of the polypropylene-based resin (A1).

11. The method according to claim 9 or 10, wherein an amount of the conjugated diene compound used is 0.20 parts by weight to 1.50 parts by weight relative to 100 parts by weight of the polypropylene-based resin (A1).

12. A method for producing polypropylene-based resin extruded foamed particles, comprising:

a melt-kneading step of melt-kneading 100 parts by weight of a polypropylene-based resin (A), 0.1 parts by weight to 13.0 parts by weight of an ethylene-based polymer (C) in which an ethylene content is more than 50% by weight, a conjugated diene compound and a radical polymerization initiator to obtain a resin composition containing a modified polypropylene-based resin (B); and
an extrusion foaming step of extruding and foaming the resin composition,
the ethylene-based polymer (C) containing at least one selected from the group consisting of an ethylene-$\alpha$-olefin elastomer (C1) and an ethylene-based polymer (C2) which has a peak at a temperature of 120°C to 140°C in a DSC curve that is obtained by a differential scanning calorimetry, and
the extrusion foaming step including:

a first step of melt-kneading, in a production device, the resin composition and a blowing agent; and
a second step of discharging a composition obtained in the first step, through a die into a region having a pressure lower than an internal pressure of the production device.

13. The method according to claim 12, wherein an amount of the radical polymerization initiator used is 0.40 parts by weight to 1.00 part by weight relative to 100 parts by weight of the polypropylene-based resin (A).

14. The method according to claim 12 or 13, wherein an amount of the conjugated diene compound used is 0.20 parts by weight to 1.50 parts by weight relative to 100 parts by weight of the polypropylene-based resin (A).

15. The method according to any one of claims 9 to 14, wherein the blowing agent is at least one selected from the group consisting of aliphatic hydrocarbons, fluorinated hydrocarbons, carbon dioxide, air, nitrogen and water.

## FIG. 1

## INTERNATIONAL SEARCH REPORT

| | International application No. |
|---|---|
| | **PCT/JP2022/015293** |

### A. CLASSIFICATION OF SUBJECT MATTER

*B29B 9/00*(2006.01)i; *C08F 255/02*(2006.01)i; *C08L 51/06*(2006.01)i; *C08J 9/16*(2006.01)i; *B29C 44/00*(2006.01)i; *B29C 48/00*(2019.01)i
FI:    C08J9/16 CES; C08L51/06; B29C48/00; B29B9/00; B29C44/00 E; C08F255/02

According to International Patent Classification (IPC) or to both national classification and IPC

### B. FIELDS SEARCHED

Minimum documentation searched (classification system followed by classification symbols)

B29B9/00; C08F255/02; C08L51/06; C08J9/16; B29C44/00; B29C48/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2018/016399 A1 (KANEKA CORP) 25 January 2018 (2018-01-25) claims, paragraphs [0011], [0020], [0040], [0043], [0088]-[0089], [0091] | 1-15 |
| Y | WO 2017/030124 A1 (KANEKA CORP) 23 February 2017 (2017-02-23) claims, paragraphs [0019], [0041], [0096], [0195]-[0197] | 1-3, 7-15 |
| A | | 4-6 |
| Y | JP 10-251436 A (JSP CORP) 22 September 1998 (1998-09-22) claims, paragraphs [0012], [0014], [0021], fig. 1 | 4-8, 15 |
| A | | 1-3, 9-14 |
| A | JP 2004-330464 A (KANEGAFUCHI CHEM IND CO LTD) 25 November 2004 (2004-11-25) claims, paragraphs [0021]-[0024] | 1-15 |
| A | JP 2005-307024 A (KANEKA CORP) 04 November 2005 (2005-11-04) | 1-15 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 May 2022** | **07 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2022/015293** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2020/004429 A1 (KANEKA CORP) 02 January 2020 (2020-01-02) | 1-15 |

Form PCT/ISA/210 (second sheet) (January 2015)

**INTERNATIONAL SEARCH REPORT**
Information on patent family members

International application No.

**PCT/JP2022/015293**

| Patent document cited in search report | | | Publication date (day/month/year) | Patent family member(s) | | | Publication date (day/month/year) |
|---|---|---|---|---|---|---|---|
| WO | 2018/016399 | A1 | 25 January 2018 | US | 2019/0153188 | A1 | |
| | | | | claims, examples | | | |
| | | | | EP | 3489287 | A1 | |
| | | | | CN | 109476868 | A | |
| WO | 2017/030124 | A1 | 23 February 2017 | US | 2018/0142074 | A1 | |
| | | | | claims, examples | | | |
| | | | | EP | 3339358 | A1 | |
| | | | | CN | 107849285 | A | |
| JP | 10-251436 | A | 22 September 1998 | (Family: none) | | | |
| JP | 2004-330464 | A | 25 November 2004 | (Family: none) | | | |
| JP | 2005-307024 | A | 04 November 2005 | (Family: none) | | | |
| WO | 2020/004429 | A1 | 02 January 2020 | US | 2021/0108016 | A1 | |
| | | | | EP | 3816209 | A1 | |
| | | | | CN | 112368322 | A | |

Form PCT/ISA/210 (patent family annex) (January 2015)

**EP 4 316 763 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11035723 A
- JP 10237212 A
- JP 2019172961 A